# EUROPEAN PATENT SPECIFICATION

(11) **EP 2 943 804 B1**
(45) Date of publication and mention of the grant of the patent: **28.09.2016**
(21) Application number: 13826662.2
(22) Date of filing: 27.12.2013
(51) Int. Cl.: G01S 19/48, G01S 5/00, G01S 5/02, G01S 5/16, G06T 7/00, H04W 72/00, G01C 21/20, G06K 9/00

(54) **SUPPORTING AND ENHANCING IMAGE-BASED POSITIONING**
UNTERSTÜTZUNG UND VERBESSERUNG EINER BILDBASIERTEN POSITIONIERUNG
PRISE EN CHARGE ET AMÉLIORATION DE LOCALISATION À BASE D'IMAGE

(30) Priority: 09.01.2013 US 201361750736 P
(43) Date of publication of application: 18.11.2015
(73) Proprietor: Telefonaktiebolaget LM Ericsson (publ), 164 83 Stockholm (SE)
(72) Inventor: Siomina, Iana, S-183 30 Täby (SE)
(74) Representative: Ericsson
(86) International application number: PCT/SE2013/051621
(87) International publication number: WO 2014/109694

(56) References cited:
- US-A1- 2009 181 698
- US-A1- 2010 004 003
- US-A1- 2011 064 312
- US-A1- 2012 197 519
- US-A1- 2012 300 020

## Description

### TECHNICAL FIELD

The technical field of the present disclosure generally relates to wireless communications networks and in particular to networks supporting positioning based on images.

Although terminologies from 3rd Generation Partnership Project (3GPP) Long Term Evolution (LTE) are used in this disclosure for explanation purposes, this should not be seen as limiting the scope of the disclosed subject matter to only the aforementioned system. Other wireless systems, including Wideband Code Division Multiple Access (WCDMA), Microwave Access (WiMax), Ultra Mobile Broadband (UMB), Global System for Mobile communications (GSM) and others may benefit from exploiting the ideas covered within this disclosure.

### BACKGROUND

Communication devices such as terminals are also known as e.g. User Equipments (UE), mobile terminals, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, cellular telephones, laptops, or surf plates with wireless capability, just to mention some further examples. The terminals in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

The possibility to determine the position of a mobile device has enabled application developers and wireless network operators to provide location based, and location aware, services. Examples of those are guiding systems, shopping assistance, friend finder, presence services, community and communication services and other information services giving the mobile user information about their surroundings.

In addition to the commercial services, the governments in several countries have put requirements on the network operators to be able to determine the position of an emergency call. For instance, the governmental requirements in the United States of America, e.g., Federal Communications Commission (FCC) E911, that it must be possible to determine the position of a certain percentage of all emergency calls. The requirements do not differentiate between indoor and outdoor environment.

In many environments, the position can be accurately estimated by using positioning methods based on Global Positioning System (GPS). However, GPS based positioning may often have unsatisfactory performance e.g., in urban and/or indoor environments. Complementary positioning methods could thus be provided by a wireless network. In addition to UE based Global Navigation Satellite System (GNSS), including GPS, the following methods are available in the LTE standard for both the control plane and the user plane:
- Cell IDentifier (CID);
- Enhanced CID (E-CID), including network-based Angle-of-Arrival (AoA);
- Assisted-Global Navigation Satellite System (A-GNSS), including Assisted GPS (A-GPS);
- Observed Time Difference of Arrival (OTDOA);
- UL Time Difference of Arrival (UTDOA) - being currently standardized.

*Time Difference of Arrival (TDOA)-*/*Time of Arrival (TOA)-based methods, e.g., OTDOA, UTDOA or GNSS*/*A*-*GNSS:* A typical format of the positioning result is an ellipsoid point with uncertainty circle/ellipse/ellipsoid which is the result of intersection of multiple hyperbolas/hyperbolic arcs, e.g., OTDOA, or circles/arcs, e.g., UTDOA, GNSS, or A-GNSS.

*Hybrid methods:* Since the hybrid technique involves a mix of any of the methods above, the position result can be any shape, but in many cases it is likely to be a polygon.

Cellular positioning methods rely on knowledge of anchor nodes' locations, e.g., eNodeB or beacon device locations for OTDOA, Location Measurement Units (LMU) antenna locations for UTDOA, eNodeB locations for E-CID. The anchor nodes' location may also be used to enhance Adaptive Enhanced Cell ID (AECID), hybrid positioning, etc.

### Image-Based Positioning

Image Recognition Based Positioning (IRBP) uses image feature analysis in the target device or on the location server to determine, or help determine, the target device's position.

The IRBP is being standardized by the Open Mobile Alliance (OMA) group and will also be possible via a 3GPP interface.

Prior art image-based positioning methods are known from US 2012/300020 A1 and US 2011/064312 A1.

### Positioning in LTE

The three key network elements in an LTE positioning architecture are the LoCation Service (LCS) Client, the LCS target and the LCS Server. The LCS Server is a physical or logical entity managing positioning for a LCS target device by collecting measurements and other location information, assisting the terminal in measurements when necessary, and estimating the LCS target location. A LCS Client is a software and/or hardware entity that interacts with a LCS Server for the purpose of obtaining location information for one or more LCS targets, i.e., the entities being positioned. LCS Clients may reside in a network node, external node, Public Safety Answering Point (PSAP), UE, radio base station, etc., and they may also reside in the LCS targets themselves. An LCS Client, e.g., an external LCS Client, sends a request to LCS Server, e.g., positioning node, to obtain location information, and LCS Server processes and serves the received requests and sends the positioning result and optionally a velocity estimate to the LCS Client.

Position calculation can be conducted, for example, by a positioning server, e.g., Evolved- Serving Mobile Location Center (E-SMLC) or Secure Location Platform (SLP) in LTE, or UE. The latter corresponds to the UE-based positioning mode, whilst the former may be network-based positioning, calculation in a network node based on measurements collected from network nodes such as LMUs or eNodeBs, UE-assisted positioning, calculation is in a positioning network node based on measurements received from UE, LMU-assisted, calculation is in a positioning network node based on measurements received from LMUs, etc.

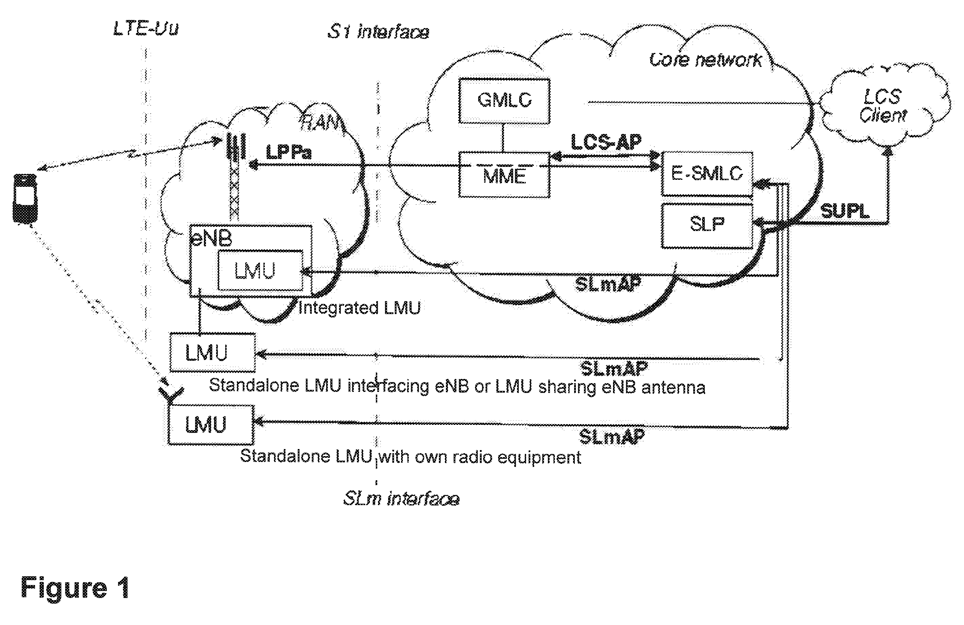

**Figure 1** illustrates the UL positioning architecture in LTE. In particular, Figure 1 illustrates the UTDOA architecture being currently discussed in 3GPP. Although UL measurements may in principle be performed by any radio network node, e.g., eNodeB, UL positioning architecture may include specific UL measurement units e.g., LMUs, which e.g., may be logical and/or physical nodes, may be integrated with radio base stations or sharing some of the software or hardware equipment with radio base stations or may be completely standalone nodes with own equipment, including antennas. The architecture is not finalized yet, but there may be communication protocols between LMU and positioning node, and there may be some enhancements for LTE Positioning Protocol Annex (LPPa) or similar protocols to support UL positioning. A new interface, SLm, between the E-SMLC and LMU is being standardized for uplink positioning. The interface is terminated between a positioning server, E-SMLC, and LMU. It is used to transport SLmAP protocol, new protocol being specified for UL positioning) messages over the E-SMLC-to-LMU interface. Several LMU deployment options are possible. For example, an LMU may be a standalone physical node, it may be integrated into eNodeB or it may be sharing at least some equipment such as antennas with eNodeB - these three options are illustrated in the Figure 1.

LPPa is a protocol between eNodeB and LCS Server specified only for control plane positioning procedures, although it still can assist user plane positioning by querying eNodeBs for information and eNodeB measurements. LPPa may be used for DL positioning and UL positioning.

In LTE, UTDOA measurements, UL Relative Time Of Arrival (RTOA), are performed on Sounding Reference Signals (SRS). To detect an SRS signal, LMU needs a number of SRS parameters to generate the SRS sequence which is to be correlated to received signals. The SRS parameters would have to be provided in the assistance data transmitted by positioning node to LMU; these assistance data would be provided via SLmAP, a.k.a. LMUp. However, these parameters may generally be not known to the positioning node, which needs then to obtain this information from eNodeB configuring the SRS to be transmitted by the UE and measured by LMU; this information would have to be provided in LPPa or similar protocol.

Another example of UL positioning, except UTDOA, is e.g., E-CID positioning based on UL measurements.

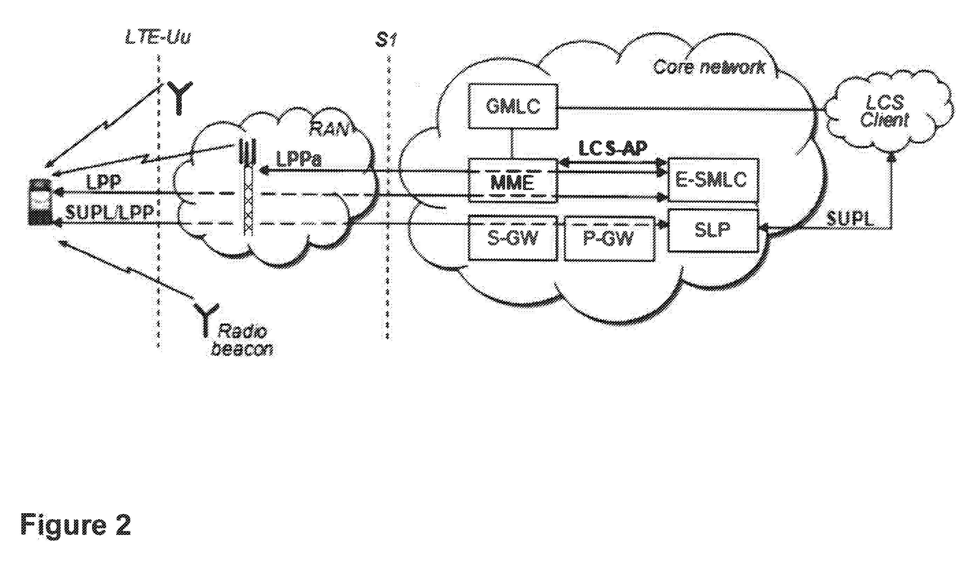

In **Figure 2****,** architecture for DL positioning in LTE is illustrated. Some examples of DL positioning are OTDOA and E-CID based on DL measurements. Position calculation may be performed in the device or in a network node. To facilitate DL positioning, a wireless device may be provided with assistance data, e.g., OTDOA assistance data comprises a list of cells to be measured, radio signals configuration for the measurements, approximate timing, etc... In LTE, the assistance data is provided via the LTE Positioning Protocol (LPP) protocol, between positioning server and target UE. LPP may also embed LPP extensions (LPPe) to convey additional information standardized by OMA. LPPe may also be used for user-plane positioning via Secure User Plane Location (SUPL) for LTE, GSM, Code Division Multiple Access (CDMA), and WCDMA. To collect the information necessary for the positioning node to build the assistance data, positioning node may communicate with radio network nodes, e.g., eNodeBs, e.g., via LPPa protocol. Alternatively or in addition thereto, positioning node may also obtain some information from Operation and Maintenance (O&M).

### Positioning Quality of Service (QoS)

Positioning QoS normally refers to two aspects of requirement: positioning accuracy and response time. Positioning QoS should not be confused with positioning measurements QoS, where the latter also impacts the achieved positioning result QoS. The importance of each of the two quality characteristics is that they are generally service- and LCS application dependent. Often the positioning accuracy is of a more importance and typically it is the bottleneck in implementation.

Accuracy, and confidence, is important in several parts of the positioning system. First, when a positioning request arrives from the end user to the positioning node, a decision on which positioning method to use needs to be taken. The positioning node then needs to look up prior accuracies of the available positioning methods and compared these to the signaled requested accuracy from the end user, in order to select a most suitable positioning method. Then when a positioning results is available, the achieved accuracy is computed in the positioning node and it is determined if the requested accuracy was met. If so the positioning node reports the result and possibly the accuracy, back to the end user. If not met, the positioning node may proceed with a positioning re-attempt or another positioning method.

Positioning QoS may be of two types:
- Target positioning QoS, a.k.a. target LCS quality, which may be associated, e.g., with the LCS Client type or service type and is typically known prior positioning method selection, e.g., received by positioning node from Mobility Management Entity (MME) or obtained by a pre-defined rule;
- Positioning result QoS or positioning result quality. Positioning result QoS and/or quality should be distinguished from positioning measurement quality. There may be multiple measurements used for positioning of the same UE, and each measurement is characterized with own quality. The set of measurements and their qualities may also impact the positioning result quality, but measurement quality is not the same as the positioning result quality.

At least the following problems may be observed with the prior art solutions:
- Lack of simple and efficient methods of using images for positioning, which could benefit positioning of many wireless devices, since most of the devices are nowadays are equipped with cameras;
- No support for image recognition based positioning in standards, e.g., 3GPP, or over interfaces defined in the standards.

### SUMMARY

It is an object of embodiments herein to improve the performance in a radio communications network by providing an improved way to use images for positioning of a wireless device in the radio communications network.

The disclosed subject matter includes at least the following non-limiting aspects: methods of using image data for positioning, methods of position estimation based on at least two images, methods of enhanced information signaling to support image-based positioning, and methods of obtaining positioning result QoS characteristics for a positioning result obtained with image-based positioning.

According to a specific first aspect the object is achieved by a method in the radio communications network of using image data for positioning a first wireless device. The first wireless device operates in the radio communications network. The method comprises obtaining image data. The image data comprises at least two image objects and an angle between lines formed between each of the objects and a reference point. The method further comprises extracting the at least two image objects from the obtained image data. The method also comprises determining, from the obtained image data, the angle between the lines formed between each of the objects and the reference point. The method further comprises, using the at least two image objects and/or the image data for positioning the first wireless device based on the determined angle. The method is performed by at least one of: a network node, the first wireless device, a camera device, a second wireless device, an image processing node and a server, each operating in the radio communications network.

According to a specific second aspect the object is achieved by a method performed by a positioning node of using the image data for positioning the first wireless device. The positioning node and the first wireless device operate in the radio communications network. The positioning node obtains the capability data associated with image-based positioning from one of: the network node, the first wireless device, the second wireless device, the camera device, the image processing node and the server, each operating in the radio communications network. The positioning node selects the image-based positioning method based on the obtained capability. The positioning node further obtains the image data and/or the at least two image objects and the angle between the lines formed between each of the objects and the reference point from the one of: the network node, the first wireless device, the second wireless device, the camera device, the image processing node and the server. The image data comprises the at least two image objects and the angle between the lines formed between each of the objects and the reference point. The positioning node uses the at least two image objects and/or the image data for positioning the first wireless device.

According to a specific third aspect the object is achieved by the network node for using the image data for positioning the first wireless device. The network node and the first wireless device are configured to operate in the radio communications network. The network node is configured to obtain the image data comprising the at least two image objects and the angle between the lines formed between each of the objects and the reference point. The network node is further configured to extract the at least two image objects from the obtained image data. The network node is also configured to determine, from the obtained image data, the angle between the lines formed between each of the objects and the reference point. The network node is further configured to use the at least two image objects and/or the image data for positioning the first wireless device based on the determined angle.

According to a specific fourth aspect the object is achieved by the wireless device for using the image data for positioning the first wireless device. The wireless device and the first wireless device are configured to operate in the radio communications network. The wireless device is configured to obtain the image data comprising the at least two image objects and the angle between the lines formed between each of the objects and the reference point. The wireless device is further configured to extract the at least two image objects from the obtained image data. The wireless device is also configured to determine, from the obtained image data, the angle between the lines formed between each of the objects and the reference point. The wireless device is further configured to use the at least two image objects and/or the image data for positioning the first wireless device based on the determined angle.

According to a specific fifth aspect the object is achieved by the positioning node for using the image data for positioning the first wireless device. The positioning node and the first wireless device are configured to operate in the radio communications network. The positioning node is configured to obtain the capability data associated with image-based positioning from the one of: the network node, the first wireless device, the second wireless device, the camera device, the image processing node and the server, each configured to operate in the radio communications network. The positioning node is further configured to select an image-based positioning method based on the obtained capability. The positioning node is also configured to obtain the image data and/or the at least two image objects and the angle between the lines formed between each of the objects and the reference point from the one of: the network node, the first wireless device, the second wireless device, the camera device, the image processing node and the server. The image data comprises the at least two image objects and the angle between the lines formed between each of the objects and the reference point. The positioning node is further configured to use the at least two image objects and/or the image data for positioning the first wireless device.

According to a specific sixth aspect the object is achieved by a computer program comprising instructions. The instructions, when executed on at least one processor, cause the at least one processor to carry out the method performed by the network node.

According to a specific seventh aspect the object is achieved by a computer program comprising instructions. The instructions, when executed on at least one processor, cause the at least one processor to carry out the method performed by the first wireless device.

According to a specific eighth aspect the object is achieved by a computer program comprising instructions. The instructions, when executed on at least one processor, cause the at least one processor to carry out the method performed by the positioning node.

According to a specific ninth aspect the object is achieved by a computer-readable storage medium. The computer-readable storage medium has stored thereon the computer program comprising the instructions that, when executed on at least one processor, cause the at least one processor to carry out the method performed by the network node.

According to a specific tenth aspect the object is achieved by a computer-readable storage medium. The computer-readable storage medium has stored thereon the computer program comprising the instructions that, when executed on at least one processor, cause the at least one processor to carry out the method performed by the first wireless device.

According to a specific eleventh aspect the object is achieved by a computer-readable storage medium. The computer-readable storage medium has stored thereon the computer program comprising the instructions that, when executed on at least one processor, cause the at least one processor to carry out the method performed by the positioning node.

By using the at least two image objects and/or the image data extracted from the image data for positioning the first wireless device based on the determined angle, a simple and efficient method of using images for positioning, is provided, which may benefit positioning of many wireless devices, since most of the devices are nowadays are equipped with cameras.

Further advantages of some embodiments disclosed herein are discussed further down below.

### BRIEF DESCRIPTION OF THE DRAWINGS

Embodiments will now be described in more detail in relation to the enclosed drawings, in which:
- Figure 1: is a schematic diagram illustrating UL positioning architecture in LTE.
- Figure 2: is a schematic diagram illustrating DL positioning architecture in LTE.
- Figure 3: is a schematic overview of embodiments in the radio communications network.
- Figure 4: is a schematic flow chart illustrating a method in a radio communications network according to embodiments herein.
- Figure 5: is a schematic flow chart illustrating a method in a positioning node according to embodiments herein.
- Figure 6: is a block diagram depicting a network node according to embodiments herein.
- Figure 7: is a block diagram depicting embodiments of a wireless device according to embodiments herein.
- Figure 8: is a block diagram depicting embodiments of a positioning node according to embodiments herein.
- Figure 9a: is a schematic diagram illustrating an example of a device two pairs of pictures: A,C and B,D according to embodiments herein.
- Figure 9b: illustrates an example of the two pairs of pictures: A,C and B,D according to embodiments herein.
- Figure 10a: is a schematic diagram illustrating an example of finding a 2D position of the device, according to embodiments herein.
- Figure 10b: is a schematic diagram illustrating an example of finding a 3D position of the device, e.g., a vertical line, according to embodiments herein.
- Figure 11: is a schematic diagram illustrating an example of finding a 3D position of the device when vertical angles are unknown, according to embodiments herein.
- Figure 12: is a schematic diagram illustrating an example of hybrid positioning based on two pictures, taken at 180°, and a timing and/or distance measurement, forming an intersecting arc, according to embodiments herein.
- Figure 13: is a schematic diagram illustrating an example of finding a 3D position, small circle, of the device using hybrid positioning, e.g., with timing/distance measurement, according to embodiments herein.
- Figure 14: is a schematic diagram illustrating an example of finding a 2D position of the device, uncertainty polygon in bold - an intersection of the two strips, according to embodiments herein.
- Figure 15: is a block diagram depicting a network node according to embodiments herein.
- Figure 16: is a block diagram depicting a network node according to embodiments herein.
- Figure 17: is a block diagram depicting embodiments of a positioning node according to embodiments herein.1
- Figure 18: is a block diagram depicting embodiments of a positioning node according to embodiments herein
- Figure 19: is a block diagram depicting embodiments of a measuring node according to embodiments herein.
- Figure 20: is a block diagram depicting embodiments of a measuring node according to embodiments herein.
- Figure 21: is a block diagram depicting embodiments of a coordinating node according to embodiments herein.
- Figure 22: is a block diagram depicting embodiments of a coordinating node according to embodiments herein.
- Figure 23: is a block diagram depicting embodiments of a wireless device according to embodiments herein.
- Figure 24: is a block diagram depicting embodiments of a wireless device according to embodiments herein.

### DETAILED DESCRIPTION

Embodiments will now be described more fully hereinafter with reference to the accompanying drawings, in which examples of the claimed embodiments are shown.

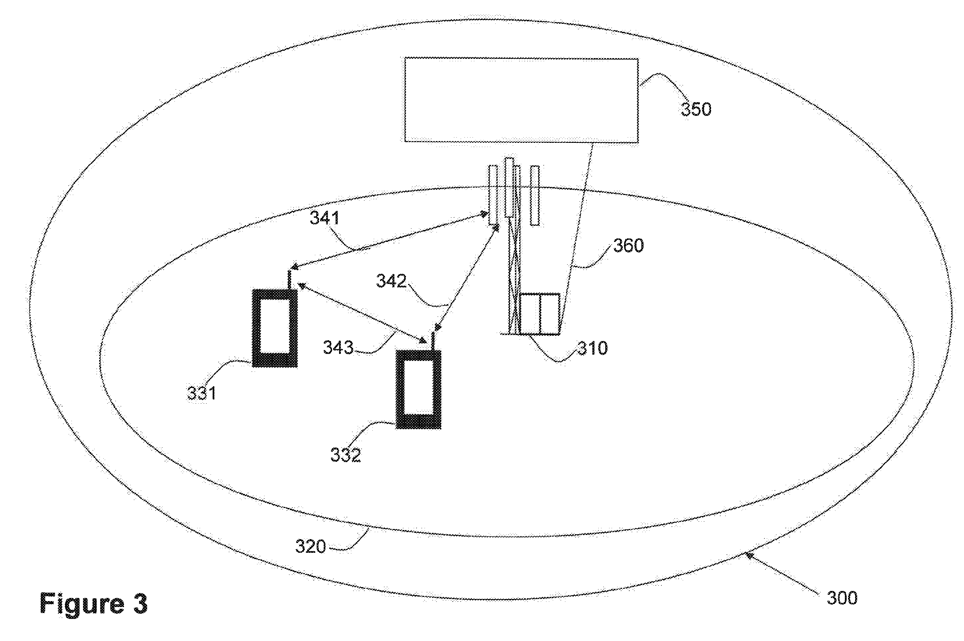

Figure 3 is a schematic overview of a radio communications network 300 in which embodiments herein may be implemented. The radio communications network 300, sometimes also referred to as a cellular radio system, wireless communications network or cellular network, may for example be a network such as a Long-Term Evolution (LTE), e.g. LTE Frequency Division Duplex (FDD), LTE Time Division Duplex (TDD), LTE Half-Duplex Frequency Division Duplex (HD-FDD), LTE operating in an unlicensed band. The described embodiments are not limited to LTE, but may apply with any RAN, single- or multi- Radio Access Technologies (RAT). Some other RAT examples are LTE-Advanced, Universal Mobile Telecommunications System (UMTS), High-Speed Packet Access (HSPA), Global System for Mobile communications (GSM) network, Code Division Multiple Access 2000 (cdma2000), Worldwide Interoperability for Microwave Access (WiMax), WiFi, Wideband Code Division Multiple Access (WCDMA), Universal Terrestrial Radio Access (UTRA) TDD, GSM/Enhanced Data Rate for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, 5G system or any cellular network or system. Thus, although terminology from 3GPP LTE may be used in this disclosure to exemplify embodiments herein, this should not be seen as limiting the scope of the embodiments herein to only the aforementioned system.

The radio communications network 300 comprises a **network node 310.** The network node 310 may be any radio network node, see the corresponding description, as depicted in Figure 3, or core network node. The network node 310 may be, for example, a base station such as e.g. an eNB, eNodeB, or a Home Node B, a Home eNode B, femto Base Station, BS, pico BS or any other network unit capable to serve a device or a machine type communication device in a radio communications network 300. In some particular embodiments, the network node 310 may be a stationary relay node or a mobile relay node. The radio communications network 300 covers a geographical area which is divided into cell areas, wherein each cell area is served by a network node, although, one network node may serve one or several cells. In the example depicted in Figure 3, the network node 310 provides radio coverage over at least one geographical area forming a **cell 320.** The network node 310 may be of different classes, such as e.g. macro eNodeB, home eNodeB or pico base station, based on transmission power and thereby also cell size. The network node 310 may support one or several communication technologies, and its name may depend on the technology and terminology used.

Some other non-limiting examples of the network node 310 are also a radio network node, Radio Network Controller (RNC), positioning node, MME, PSAP, Self-Optimized Network (SON) node, Minimization of Drive Tests (MDT) node, coordinating node, a gateway node, e.g., Packet Data Network Gateway (PGW) or Serving Gateway (SGW) or LMU gateway or femto gateway, and O&M node.

The term "coordinating node" used herein may be a network and/or node, which coordinates radio resources with one or more radio nodes. Some examples of the coordinating node are network monitoring and configuration node, Operational Support System (OSS) node, O&M, MDT node, SON node, positioning node, MME, a gateway node such as PGW or SGW network node or femto gateway node, a macro node coordinating smaller radio nodes associated with it, eNodeB coordinating resources with other eNodeBs, etc.

The radio communications network 300 comprises more network nodes such as network node 310. This is not depicted in Figure 3 for the sake of simplicity. Herein, another network node refers to a network node just as network node 310, that is not the network node 310.

A number of wireless devices are located in the radio communications network 300. In the example scenario of Figure 3, two wireless devices are shown, a first wireless **device 331 and a second wireless device 332.** Each of the first wireless device 331 and the second wireless device 332 is a wireless communication device such as a UE, which is also known as e.g. mobile terminal, wireless terminal and/or mobile station. Each of the first wireless device 331 and the second wireless device 332 is wireless, i.e., it is enabled to communicate wirelessly in the radio communications network 300. The communication may be performed e.g., between two devices, such as the first wireless device 331 and the second wireless device 332, between a device and a regular telephone and/or between a device and a server. The communication may be performed e.g., via a RAN and possibly one or more core networks, comprised within the radio communications network 300.

Each of the first wireless device 331 and the second wireless device 332 may further be referred to as a mobile telephone, cellular telephone, or laptop with wireless capability, just to mention some further examples. Each of the first wireless device 331 and the second wireless device 332 in the present context may be, for example, portable, pocket-storable, hand-held, computer-comprised, or vehicle-mounted mobile devices, enabled to communicate voice and/or data, via the RAN, with another entity, such as a server, a laptop, a Personal Digital Assistant (PDA), or a tablet computer, sometimes referred to as a surf plate with wireless capability, Machine-to-Machine (M2M) devices, devices equipped with a wireless interface, such as a printer or a file storage device or any other radio network unit capable of communicating over a radio link in a cellular communications system.

In this description, wireless device, such as the first wireless device 331 and the second wireless device 332, and UE are used interchangeably. Thus, any reference to a UE herein, will be understood to apply to a wireless device such as any of the first wireless device 331 and the second wireless device 332, unless specific references are made to the first wireless device 331, or the second wireless device 332. Further, any reference herein to the **wireless device 331, 332,** will be understood to refer to any of the first wireless device or the second wireless device 332, unless noted otherwise. A UE, such as the first wireless device 331 and the second wireless device 332, can be any device equipped with a radio interface and capable of at least transmitting to and/or receiving radio signals from another radio node. A UE, such as the first wireless device 331 and the second wireless device 332, may also be capable of receiving signal and demodulate it. Note that even some radio network nodes, e.g., femto BS, a.k.a. home BS, may also be equipped with a UE-like interface. Some example of "UE" that are to be understood in a general sense are Personal Digital Assistant (PDA), laptop, mobile, a tablet device, sensor, fixed relay, mobile relay, any radio network node equipped with a UE-like interface, e.g., small RBS, eNodeB, femto BS.

Terminology "device" is also used herein. A wireless device, such as the first wireless device 331 and the second wireless device 332, is one example of a device. Another example of the device is a device capable of taking and/or processing pictures, which may be comprised in a wireless device, such as the first wireless device 331, may be able to communicate with another device, such as the second wireless device 332, may or may not have a wireless interface, where the wireless interface may also be a short-range communication radio interface in some examples.

The network node 310 may communicate with the first wireless device 331 over a **first radio link 341,** and with the second wireless device 332 over a **second radio link 342.** The first wireless device 331 and the second wireless device 332 may communicate over a **third radio link 343.**

The radio communications network 300 may comprise a **positioning node 350.** The positioning node 350 described in different embodiments may be a node with positioning functionality. The positioning node 350 may be a physical and/or logical node. For example, for LTE, it may be understood as a positioning platform in the user plane, e.g., SLP in LTE, or a positioning node in the control plane, e.g., E-SMLC in LTE. SLP may also consist of SUPL Location Centre (SLC) and SPC, where SPC may also have a proprietary interface with E-SMLC. Positioning functionality may also be split among two or more nodes, e.g., there may be a gateway node between LMUs and E-SMLC, where the gateway node may be a radio base station or another network node; in this case, the term "positioning node" may relate to E-SMLC and the gateway node. In a testing environment, a positioning node may be a simulator or emulating test equipment. In some embodiments, positioning node may also be used interchangeably with "positioning server" which may be any node configured as a positioning server, e.g., a wireless device, such as the first wireless device 331 and the second wireless device 332, or the network node 310, e.g., eNodeB, E-SMLC or SLP.

Further detailed information of the nodes described herein is provided below.

A radio node may be characterized by its ability to transmit and/or receive radio signals and it comprises at least a transmitting or receiving antenna. Examples of radio nodes include a UE, such as the first wireless device 331 and the second wireless device 332, and a radio network node, such as the network node 310, see the corresponding descriptions.

A radio network node may be a radio node comprised in the radio communications network 300. The radio network node may be capable of receiving and/or transmitting radio signals in one or more frequencies, and may operate in single-Radio Access Technology (RAT), multi-RAT or multi-standard mode. The radio network node, including the network node 310, eNodeB, Remote Radio Head (RRH), Remote Radio Unit (RRU), or transmitting-only and/or receiving-only radio network nodes, may or may not create its own cell, such as the cell 320. Some examples of radio network nodes not creating their own cell include beacon devices, which may transmit configured radio signals, and measuring nodes, which may receive and perform measurements on certain signals, e.g., LMUs. Such radio network node may also share cell or use the cell IDentifier (ID) with another radio node which creates its own cell, such as the cell 320, and/or it may operate in a cell sector or may be associated with a radio network node creating own cell, such as network node 310 which creates its own cell 320.

More than one cell or cell sectors, commonly named in the described embodiments by a generalized term "cell" 320, which may be understood as a cell or its logical or geographical part, may be associated with one radio network node, such as network node 310. Further, one or more serving cells, such as the cell 320, in DL and/or UL, may be configured for a UE, such as the first wireless device 331 and the second wireless device 332, e.g., in a carrier aggregation system where a UE may have one Primary Cell (PCell) and one or more Secondary Cells (SCells). The cell 320 may also be a virtual cell, e.g., characterized by a cell ID but not provide a full cell-like service, associated with a transmit node.

The signaling described herein may be either via direct links or logical links, e.g., via higher layer protocols and/or via one or more network and/or radio nodes. For example, signaling from a coordinating node to a UE, such as the first wireless device 331 and the second wireless device 332, may also pass another network node such as the network node 310, e.g., a radio network node.

The term "subframe" used in the embodiments described herein, typically related to LTE, is an example resource in the time domain, and in general it may be any predefined time instance or time period.

Measuring node can be a radio node that performs radio measurements of interest transmitted from other radio nodes such as wireless devices, such as the first wireless device 331 and the second wireless device 332, eNodeBs, such as the network node 310, LMUs, etc. The measuring node can be a wireless device, such as the first wireless device 331 and the second wireless device 332, or a radio network node, such as the network node 310.

An image object may comprise, e.g., image data of important landmarks and scenic spots at various geographic positions, image of a street, image of a street marker or of a place name, image of a building, a graphical or visualization object describing or illustrating at least some visual properties of a real object, e.g., a building, a window, a bus stop, a direction sign, or environment, e.g., mountain, an image comprising one or more feature points of the environment, a visualization object, etc. An image object may further comprise an encoded or digitally represented image data, e.g., an image data file. The image data may comprise a static picture or a moving picture. Some examples of image data formats include: raster, vector, compound, e.g., both pixel and vector data, possible other data, e.g., the interactive features of PDF; EPS, PS, XMAL, PICT, SWF, etc., and stereo, e.g., MPO, PNS, JPS, etc. formats, which may also be in uncompressed or compressed formats. That is, an image data object may be understood as a distinguishable part, i.e., representing/illustrating a physical object, of an image, e.g., a building, a bridge, a tree, etc. Image data may be understood as a data set encoding or describing an image.

Image recognition may be described as a function of image processing and/or image analysis. It may be implemented in a device, such as the first wireless device 331 and the second wireless device 332, node, such as the network node 310 or any of the first wireless device 331 and the second wireless device 332, or a computer vision system which may or may not be comprised in a wireless communications network, such as the radio communications network 300. Herein, image recognition may comprise also any one or more of: determination of an object or a pattern comprised in the image data, pattern recognition, object recognition, object identification, object separation, object detection, classification or categorization of a detected object, comparing a determined object or pattern to a reference object or pattern, comparing different views of the same object, etc.

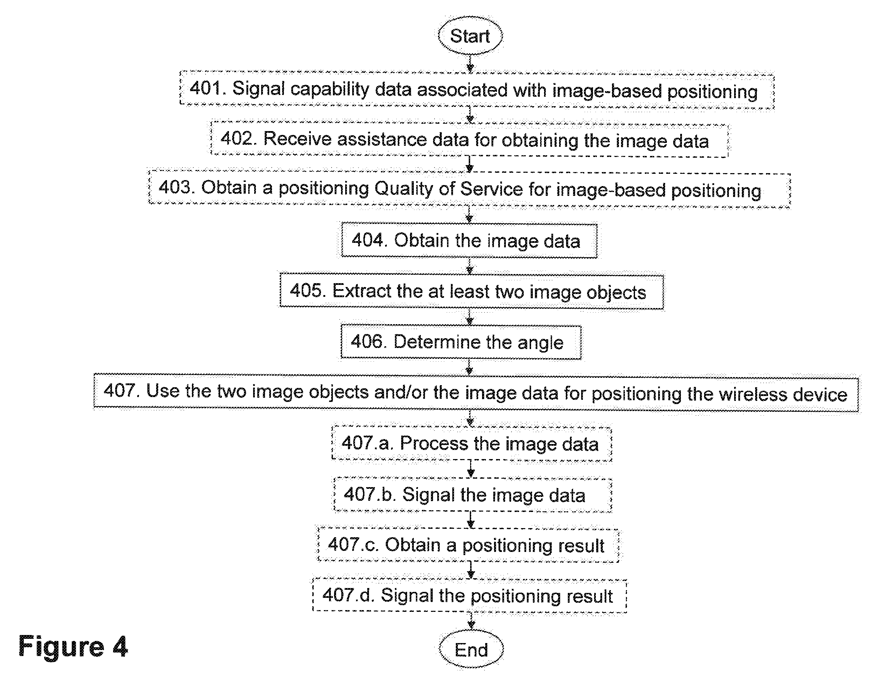

Example of embodiments of a method in the radio communications network 300 of using the image data for positioning the first wireless device 331, will now be described with reference to a flowchart depicted in **Figure 4****.** The first wireless device 331 operates in the radio communications network 300, as described earlier. The method is performed by at least one of: the network node 310, the first wireless device 331, a camera device, the second wireless device 332, an image processing node and a server, each operating in the radio communications network 300.

The method may comprise the following actions, which actions may as well be carried out in another suitable order than that described below. In some embodiments, all the actions may be carried out, whereas in other embodiments only some action/s may be carried out. Dashed lines of some boxes in Figure 4 indicate that the action is optional.

### Action 401

In this action, the method may comprise signaling capability data associated with image-based positioning to another node 310, 331, 332, 350 operating in the radio communications network 300. That is, if the method is performed by the first wireless device 331, the first wireless device 331 may signal the capability to, for example, the network node 310. If, for example, the method is performed by the network node 310, the network node 310 may signal the capability to, for example, the positioning node 350, and so forth. This may be implemented, for example, by sending a message to the another node 310, 331, 332, 350.

This action is described below in further detail, for example, under the subheading "3.2 Capability Signaling".

This action is optional.

### Action 402

In this action, the method may comprise receiving assistance data for obtaining the image data, from a node 310, 331, 332, 350 operating in the radio communications network 300. That is, if the method is performed by the first wireless device 331, the first wireless device 331 may receive the assistance data from, for example, the network node 310. If, for example, the method is performed by the network node 310, the network node 310 may receive the assistance data from, for example, the positioning node 350, and so forth.

This action is described below in further detail, for example, under the subheading "3.3 Assistance Data for Obtaining Image Data".

This action is optional.

### Action 403

In this action, the method may comprise obtaining a positioning Quality of Service for image-based positioning. For example, in some embodiments, a target, or desired, QoS may be comprised in a positioning request, e.g., received by the wireless device 331, 332 from the positioning node 350.

This action is described below in further detail, for example, under the subheading "4 Approach 4: Obtaining Positioning QoS for Image-Based Positioning".

### Action 404

In this action, the method comprises obtaining the image data comprising at least two image objects and an angle between lines formed between each of the objects and a reference point.

In some embodiments, the two image objects are comprised in two different images or different image sets.

This action is described below in further detail, for example, under the subheadings "1 Approach 1: Using Image Data for Positioning" and "1.1 Approach 1, Step 1 - Obtaining Image Objects and Angles".

### Action 405

In this action, the method comprises extracting the at least two image objects from the obtained image data.

This action is described below in further detail, for example, under the subheading "1.1 Approach 1, Step 1 - Obtaining Image Objects and Angles".

### Action 406

In this action, the method comprises determining, from the obtained image data, the angle between the lines formed between each of the objects and the reference point.

This action is described below in further detail, for example, under the subheading "1 Approach 1: Using Image Data for Positioning".

### Action 407

In this action, the method comprises using the at least two image objects and/or the image data for positioning the first wireless device 331 based on the determined angle.

This action is described below in further detail, for example, under the subheading "1.2 Approach 1, Step 2 - Using Images Objects for Positioning".

Using may comprise one or more of the following actions:

### Action 407a

In some embodiments, using the at least two image objects and/or the image data comprises processing the image data.

This action is described below in further detail, for example, under the subheading "1.2 Approach 1, Step 2 - Using Images Objects for Positioning".

### Action 407b

In some embodiments, using the at least two image objects and/or the image data comprises signaling the image data and/or the at least two image objects and the angle between the lines formed between each of the objects and the reference point to another node 310, 331, 332, 350 operating in the radio communications network 300 for positioning. For this action, the another node 310, 331, 332, 350 may be the same another node as in action 401, or a different another node 310, 331, 332, 350.

This action is described below in further detail, for example, under the subheading "1.2 Approach 1, Step 2 - Using Images Objects for Positioning" and "3.4 Image Data Reporting".

### Action 407c

In some embodiments, using the at least two image objects and/or the image data comprises obtaining a positioning result using the image data or results of processing the image data.

This action is described below in further detail, for example, under the subheadings "1.2 Approach 1, Step 2 - Using Images Objects for Positioning", "2 Embodiment herein 2: Position Estimation Based On At Least Two Images", "3 Embodiment herein 3: Signaling and Procedural Enhancements to Support Image-Based Positioning", and "3.1 Selection of Image-Based Positioning Method(s)".

### Action 407d

In some embodiments, using the at least two image objects and/or the image data further comprises signaling the positioning result based on the at least two image objects and/or the image data to another node 310, 331, 332, 350 operating in the radio communications network 300. This may be implemented, for example, by sending a message to this another node 310, 331, 332, 350.

For this action, the another node 310, 331, 332, 350 may be the same another node as in any of actions 401, 407b, or it may be a different another node 310, 331, 332, 350.

In some embodiments, the signaling of the positioning result further comprises signaling the obtained positioning Quality of Service. In some embodiments, the actual QoS associated with a specific result may be comprised in the message comprising an image-based positioning result, as described later, e.g., sent by the wireless device 331, 332 to the positioning node 350.

This action is described below in further detail, for example, under the subheadings "1.2 Approach 1, Step 2 - Using Images Objects for Positioning", and "3 Embodiment herein 3: Signaling and Procedural Enhancements to Support Image-Based Positioning" and "4 Approach 4: Obtaining Positioning QoS for Image-Based Positioning".

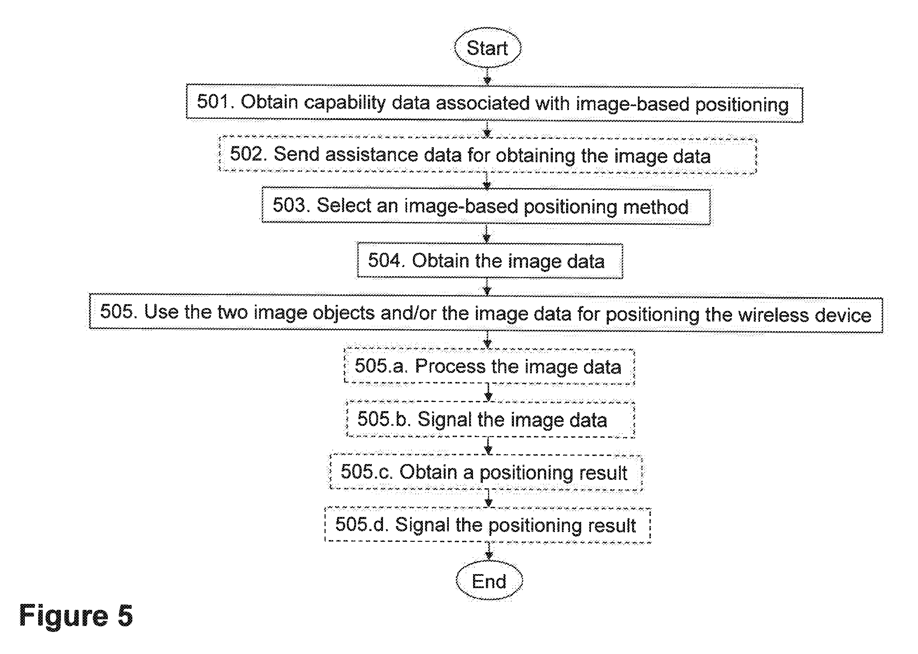

Example of embodiments of a method performed by the positioning node 350 of using the image data for positioning the first wireless device 331, will now be described with reference to a flowchart depicted in **Figure 5****.** The positioning node 350 and the first wireless device 331 operate in the radio communications network 300.

The method may comprise the following actions, which actions may as well be carried out in another suitable order than that described below. In some embodiments, all the actions may be carried out, whereas in other embodiments only some action/s may be carried out. Dashed lines of some boxes in Figure 5 indicate that the action is optional.

### Action 501

In this action, the positioning node 350 obtains the capability data associated with image-based positioning from one of: the network node 310, the first wireless device 331, the second wireless device 332, the camera device, the image processing node and the server, each operating in the radio communications network 300.

This action is described below in further detail, for example, under the subheading "3.2 Capability Signaling".

### Action 502

In this action, the positioning node 350 may send the assistance data to the one of: the network node 310, the first wireless device 331, the second wireless device 332, the camera device, the image processing node and the server, for obtaining the image data.

This action is described below in further detail, for example, under the subheading "3.3 Assistance Data for Obtaining Image Data".

This action is optional.

### Action 503

In this action, the positioning node 350 selects the image-based positioning method based on the obtained capability.

In some embodiments, selecting the image-based positioning method may be based on any one or more of: the obtained capability data, a capability associated with image-based positioning of the positioning node 350 and any involved nodes 310, 331, 332, a client type, a service type, an expected accuracy which may be achieved with the image-based positioning, a target positioning Quality of Service requested in a positioning request, landmark characteristics, an environment, time of the day, a season, an expected complexity, an expected resource consumption, available resources for image-based positioning, an image database completeness, and an availability of other positioning methods and whether any of the methods have already been tried for a LoCation Services, LCS, target.

This action is described below in further detail, for example, under the subheading "3.1 Selection of Image-Based Positioning Method(s)".

### Action 504

In this action, the positioning node 350 obtains the image data and/or the at least two image objects and the angle between the lines formed between each of the objects and the reference point from the one of: the network node 310, the first wireless device 331, the second wireless device 332, the camera device, the image processing node and the server, wherein the image data comprises the at least two image objects and the angle between the lines formed between each of the objects and the reference point.

This action is described below in further detail, for example, under the subheading "1.2 Approach 1, Step 2 - Using Images Objects for Positioning" and "3.4 Image Data Reporting".

### Action 505

In this action, the positioning node 350 uses the at least two image objects and/or the image data for positioning the first wireless device 331.

This action is described below in further detail, for example, under the subheading "1.2 Approach 1, Step 2 - Using Images Objects for Positioning".

Using may comprise one or more of the following actions:

### Action 505a

In some embodiments, using the at least two image objects and/or the image data comprises processing 505a the image data.

This action is described below in further detail, for example, under the subheading "1.2 Approach 1, Step 2 - Using Images Objects for Positioning".

### Action 505b

In some embodiments, using the at least two image objects and/or the image data comprises signaling the image data and/or the at least two image objects and the angle between the lines formed between each of the objects and the reference point to another node 310, 331, 332, 350 operating in the radio communications network 300 for positioning. For this action, the another node 310, 331, 332, 350 may be the same another node as in action 401, or a different another node 310, 331, 332, 350.

This action is described below in further detail, for example, under the subheading "1.2 Approach 1, Step 2 - Using Images Objects for Positioning" and "3.4 Image Data Reporting".

### Action 505c

In some embodiments, using the at least two image objects and/or the image data comprises obtaining the positioning result using the image data or results of processing the image data.

This action is described below in further detail, for example, under the subheadings "1.2 Approach 1, Step 2 - Using Images Objects for Positioning", "2 Embodiment herein 2: Position Estimation Based On At Least Two Images", "3 Embodiment herein 3: Signaling and Procedural Enhancements to Support Image-Based Positioning", and "3.1 Selection of Image-Based Positioning Method(s)".

### Action 505d

In some embodiments, using the at least two image objects and/or the image data further comprises signaling the positioning result to another node 310, 331, 332 operating in the radio communications network 300.

For this action, the another node 310, 331, 332, 350 may be the same another node as in any of actions 401, 407b, 505b, or it may be a different another node 310, 331, 332, 350.

In some embodiments, the signaling of the positioning result further comprises signaling the obtained positioning Quality of Service. In some embodiments , the actual QoS associated with a specific result may be comprised in a message comprising the image-based positioning result, signaled further by the positioning node 350 to the another node 310, 331, 332.

This action is described below in further detail, for example, under the subheadings "1.2 Approach 1, Step 2 - Using Images Objects for Positioning", "3 Embodiment herein 3: Signaling and Procedural Enhancements to Support Image-Based Positioning", and "4 Approach 4: Obtaining Positioning QoS for Image-Based Positioning".

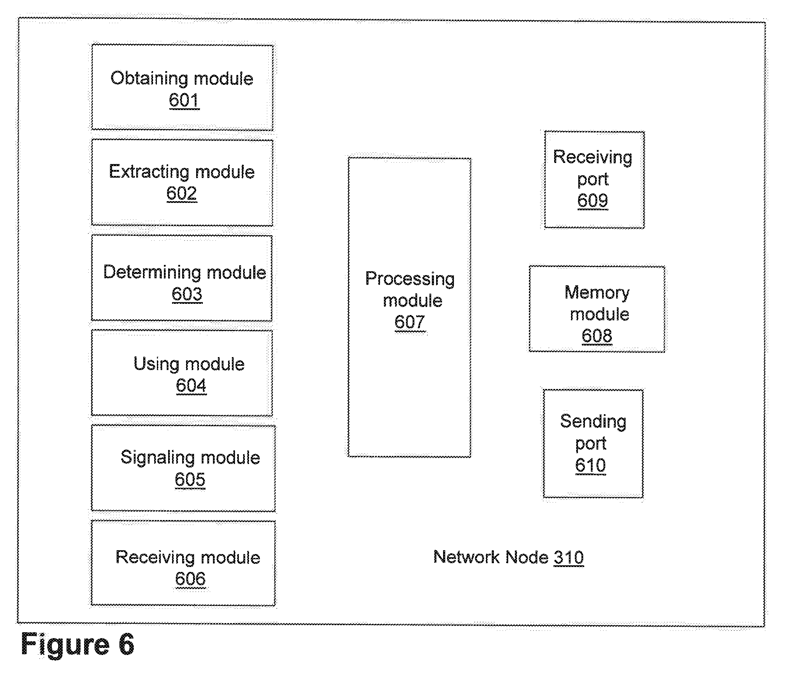

To perform the method actions in the network node 310 described above in relation to Figure 4 for for using the image data for positioning the first wireless device 331, the network node 310 comprises the following arrangement depicted in Figure 6. The network node 310 and the first wireless device 331 are configured to operate in the radio communications network 300.

The detailed description of some of the following corresponds to the same references provided above, in relation to the actions described for the network node 310, and will thus not be repeated here. For example, further detail on how to signal the capability data is configured to be performed, may be found, for example, under the subheading "3.2 Capability Signaling".

The network node 310 is configured to obtain the image data comprising the at least two image objects and the angle between the lines formed between each of the objects and the reference point.

This may be performed by an **obtaining module 601** comprised in the network node 310.

In some embodiments, the two image objects are comprised in the two different images or the different image sets.

In some embodiments, the network node 310 may be configured to obtain the positioning Quality of Service for image-based positioning.

This may also be performed by the obtaining module 601.

The network node 310 is further configured to extract the at least two image objects from the obtained image data.

This may be performed by an **extracting module 602** comprised in the network node 310.

The network node 310 is further configured to determine, from the obtained image data, the angle between the lines formed between each of the objects and the reference point.

This may be performed by a **determining module 603** comprised in the network node 310.

The network node 310 is further configured to use the at least two image objects and/or the image data for positioning the first wireless device 331 based on the determined angle.

This may be performed by a **using module 604** comprised in the network node 310.

In some embodiments, to use the at least two image objects and/or the image data comprises to process the image data.

In some embodiments, to use the at least two image objects and/or the image data comprises to obtain the positioning result using the image data or the results of processing the image data.

In some embodiments, to use the at least two image objects and/or the image data comprises to signal the image data and/or the at least two image objects and the angle between the lines formed between each of the objects and the reference point to another node 331, 332, 350 configured to operate in the radio communications network 300, as described in action 407b, for positioning.

In some embodiments, to use the at least two image objects and/or the image data further comprises to signal the positioning result based on the at least two image objects and/or the image data to another node 331, 332, 350 configured to operate in the radio communications network 300.

In some embodiments, the network node 310 may be further configured to signal the capability data associated with image-based positioning to another node 331, 332, 350 configured to operate in the radio communications network 300, as described earlier in action 401.

This may be performed by a **signaling module 605** comprised in the network node 310.

In some embodiments, to signal the positioning result further comprises to signal the obtained positioning Quality of Service.

In some embodiments, the network node 310 may be further configured to receive the assistance data for obtaining the image data, from the node 310, 331, 332, 350 configured to operate in the radio communications network 300, as described earlier in action 402.

This may be performed by a **receiving module 606** comprised in the network node 310.

The embodiments herein for using the image data for positioning the first wireless device 331 may be implemented through one or more processors, such as the **processing module 607** in the network node 310 depicted in Figure 6, together with computer program code for performing the functions and actions of the embodiments herein. The program code mentioned above may also be provided as a computer program product, for instance in the form of a data carrier carrying computer program code for performing the embodiments herein when being loaded into the in the network node 310. One such carrier may be in the form of a CD ROM disc. It may be however feasible with other data carriers such as a memory stick. The computer program code may furthermore be provided as pure program code on a server and downloaded to the network node 310.

The network node 310 may further comprise a **memory module 608** comprising one or more memory units. The memory module 608 may be arranged to be used to store data in relation to applications to perform the methods herein when being executed in the network node 310. Memory module 608 may be in communication with the processing module 607. Any of the other information processed by the processing module 607 may also be stored in the memory module 608.

In some embodiments, information may be received from, e.g., the first wireless device 331, the second wireless device 332, or the positioning node 350, through a **receiving port 609.** In some embodiments, the receiving port 609 may be, for example, connected to the one or more antennas in the network node 310. In other embodiments, the network node 310 may receive information from another structure in the radio communications network 300 through the receiving port 609. Since the receiving port 609 may be in communication with the processing module 607, the receiving port 609 may then send the received information to the processing module 607. The receiving port 609 may also be configured to receive other information.

The information processed by the processing module 607 in relation to the embodiments of method herein may be stored in the memory module 608 which, as stated earlier, may be in communication with the processing module 607 and the receiving port 609.

The processing module 607 may be further configured to transmit or send information to e.g., the first wireless device 331, the second wireless device 332, or the positioning node 350, through **a sending port 610,** which may be in communication with the processing module 607, and the memory module 608.

Those skilled in the art will also appreciate that the different modules 601-606 described above may refer to a combination of analog and digital modules, and/or one or more processors configured with software and/or firmware, e.g., stored in memory, that, when executed by the one or more processors such as the processing module 607, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the network node 310 are respectively implemented by means of a computer program product, comprising instructions, i.e., software code portions, which, when executed on at least one processor, cause the at least one processor to carry out the actions described herein, as performed by the network node 310. The computer program product may be stored on a computer-readable storage medium. The computer-readable storage medium, having stored thereon the computer program, may comprise instructions which, when executed on at least one processor, cause the at least one processor to carry out the actions described herein, as performed by the network node 310. In some embodiments, the computer-readable storage medium may be a non-transitory computer-readable storage medium.

Hence, in some embodiments, the different modules 601-606 described above may refer to respective applications running on one or more processors.

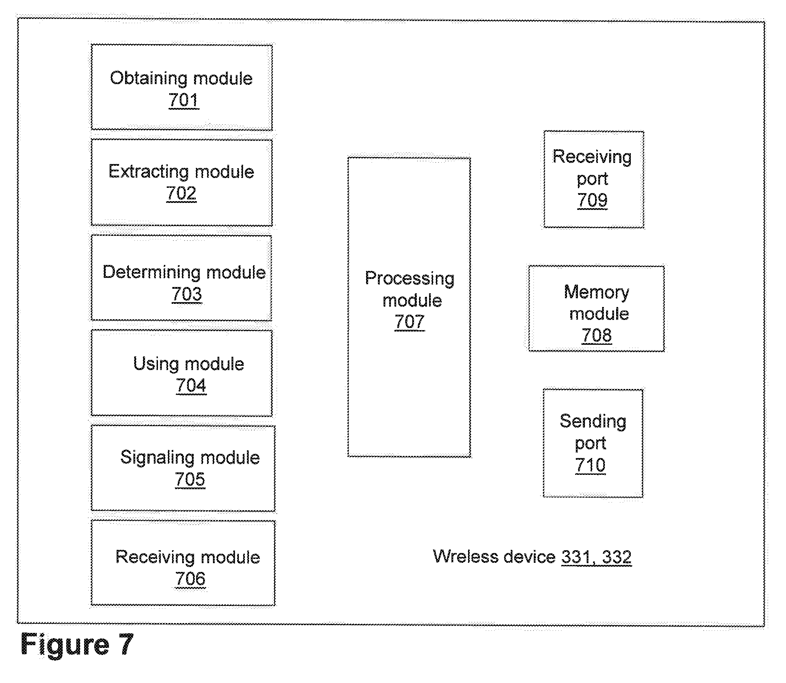

To perform the method actions in the wireless device 331, 332 described above in relation to Figure 4 for for using the image data for positioning the first wireless device 331, the first wireless device 331 comprises the following arrangement depicted in **Figure 7****.** The wireless device 331, 332 and the first wireless device 331 are configured to operate in the radio communications network 300.

The detailed description of some of the following corresponds to the same references provided above, in relation to the actions described for the wireless device 331, 332, and will thus not be repeated here. For example, further detail on how to signal the capability data is configured to be performed, may be found, for example, under the subheading "3.2 Capability Signaling".

The wireless device 331, 332 is configured to obtain the image data comprising the at least two image objects and the angle between the lines formed between each of the objects and the reference point.

This may be performed by an **obtaining module 701** comprised in the wireless device 331, 332.

In some embodiments, the two image objects are comprised in the two different images or the different image sets.

In some embodiments, the wireless device 331, 332 may be configured to obtain the positioning Quality of Service for image-based positioning.

This may also be performed by the obtaining module 701.

The wireless device 331, 332 is further configured to extract the at least two image objects from the obtained image data.

This may be performed by an **extracting module 702** comprised in the wireless device 331, 332.

The wireless device 331, 332 is further configured to determine, from the obtained image data, the angle between the lines formed between each of the objects and the reference point.

This may be performed by a **determining module 703** comprised in the wireless device 331, 332.

The wireless device 331, 332 is further configured to use the at least two image objects and/or the image data for positioning the first wireless device 331 based on the determined angle.

This may be performed by a **using module 704** comprised in the wireless device 331, 332.

In some embodiments, to use the at least two image objects and/or the image data comprises to process the image data.

In some embodiments, to use the at least two image objects and/or the image data comprises to obtain the positioning result using the image data or results of processing the image data.

In some embodiments, to use the at least two image objects and/or the image data further comprises to signal the image data and/or the at least two image objects and the angle between the lines formed between each of the objects and the reference point to another node 331, 332, 350 configured to operate in the radio communications network 300, as described in action 407b, for positioning.

In some embodiments, to use the at least two image objects and/or the image data further comprises to signal the positioning result based on the at least two image objects and/or the image data to another node 331, 332, 350 configured to operate in the radio communications network 300.

In some embodiments, the wireless device 331, 332 may be further configured to signal the capability data associated with image-based positioning to another node 331, 332, 350 configured to operate in the radio communications network 300, as described earlier in action 401.

This may be performed by a **signaling module 705** comprised in the wireless device 331, 332.

In some embodiments, to signal the positioning result further comprises to signal the obtained positioning Quality of Service.

In some embodiments, the wireless device 331, 332 may be further configured to receive the assistance data for obtaining the image data, from the node 310, 331, 332, 350 configured to operate in the radio communications network 300, as described earlier in action 402.

This may be performed by a **receiving module 706** comprised in the wireless device 331, 332.

The embodiments herein for using image data for positioning the first wireless device 331 may be implemented through one or more processors, such as the **processing module 707** in the wireless device 331, 332 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the in the wireless device 331, 332. One such carrier may be in the form of a CD ROM disc. It may be however feasible with other data carriers such as a memory stick. The computer program code may furthermore be provided as pure program code on a server and downloaded to the wireless device 331, 332.

The wireless device 331, 332 may further comprise a **memory module 708** comprising one or more memory units. The memory module 708 may be arranged to be used to store data in relation to applications to perform the methods herein when being executed in the wireless device 331, 332. Memory module 708 may be in communication with the processing module 707. Any of the other information processed by the processing module 707 may also be stored in the memory module 708.

In some embodiments, information may be received from, e.g., the network node 310, the first wireless device 331, the second wireless device 332, or the positioning node 350, through a **receiving port 709.** In some embodiments, the receiving port 709 may be, for example, connected to the one or more antennas in the wireless device 331, 332. In other embodiments, the wireless device 331, 332 may receive information from another structure in the radio communications network 300 through the receiving port 709. Since the receiving port 709 may be in communication with the processing module 707, the receiving port 709 may then send the received information to the processing module 707. The receiving port 709 may also be configured to receive other information.

The information processed by the processing module 707 in relation to the embodiments of method herein may be stored in the memory module 708 which, as stated earlier, may be in communication with the processing module 707 and the receiving port 709.

The processing module 707 may be further configured to transmit or send information to e.g., the network node 310, the first wireless device 331, the second wireless device 332, or the positioning node 350, through **a sending port 710,** which may be in communication with the processing module 707, and the memory module 708.

Those skilled in the art will also appreciate that the different modules 701-706 described above may refer to a combination of analog and digital modules, and/or one or more processors configured with software and/or firmware, e.g., stored in memory, that, when executed by the one or more processors such as the processing module 707, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the wireless device 331, 332 are respectively implemented by means of a computer program product, comprising instructions, i.e., software code portions, which, when executed on at least one processor, cause the at least one processor to carry out the actions described herein, as performed by the wireless device 331, 332. The computer program product may be stored on a computer-readable storage medium. The computer-readable storage medium, having stored thereon the computer program, may comprise instructions which, when executed on at least one processor, cause the at least one processor to carry out the actions described herein, as performed by the wireless device 331, 332. In some embodiments, the computer-readable storage medium may be a non-transitory computer-readable storage medium.

Hence, in some embodiments, the different modules 701-706 described above may refer to respective applications running on one or more processors.

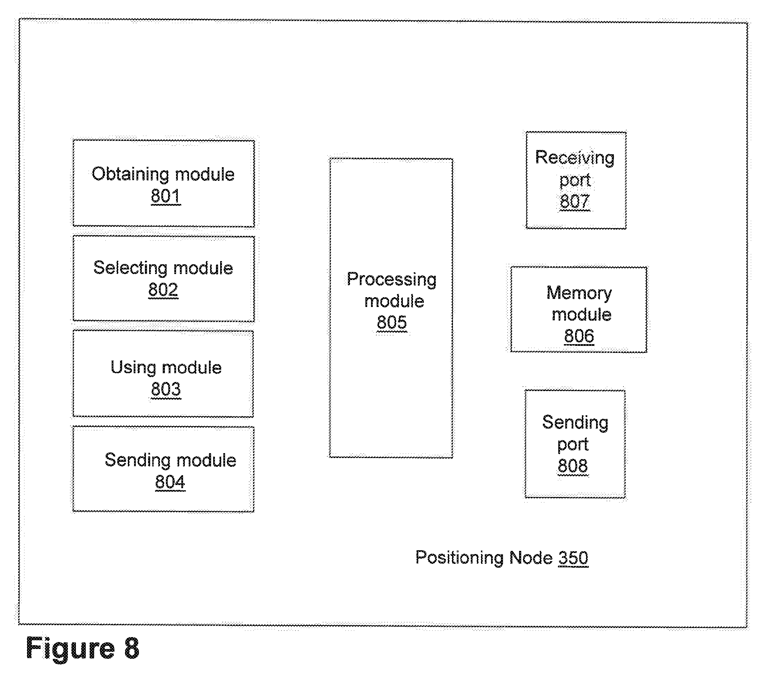

To perform the method actions in the positioning node 350 described above in relation to Figure 5 for using image data for positioning the positioning node 350, the positioning node 350 comprises the following arrangement depicted in Figure 8. The positioning node 350 and the first wireless device 331 are configured to operate in the radio communications network 300.

The detailed description of some of the following corresponds to the same references provided above, in relation to the actions described for the positioning node 350, and will thus not be repeated here. For example, further detail on how to obtain the capability data is configured to be performed, may be found, for example, under the subheading "3.2 Capability Signaling".

The positioning node 350 is configured to obtain the capability data associated with image-based positioning from one of: the network node 310, the first wireless device 331, the second wireless device 332, the camera device, an image processing node and a server, each configured to operate in the radio communications network 300.

This may be performed by an **obtaining module 801** comprised in the positioning node 350.

In some embodiments, the positioning node 350 is further configured to obtain the image data and/or the at least two image objects and the angle between the lines formed between each of the objects and the reference point from the one of: the network node 310, the first wireless device 331, the second wireless device 332, the camera device, the image processing node and the server, wherein the image data comprises the at least two image objects and the angle between lines formed between each of the objects and the reference point.

This may also be performed by the obtaining module 801.

The positioning node 350 is further configured to select the image-based positioning method based on the obtained capability.

This may be performed by a **selecting module 802** comprised in the positioning node 350.

In some embodiments, to select the image-based positioning method is based on any one or more of: the obtained capability data, a capability associated with image-based positioning of the positioning node 350 and any involved nodes 310, 331, 332, a client type, a service type, an expected accuracy which may be achieved with the image-based positioning, a target positioning QoS requested in a positioning request, landmark characteristics, an environment, time of the day, a season, an expected complexity, an expected resource consumption, available resources for image-based positioning, an image database completeness, and an availability of other positioning methods and whether any of the methods have already been tried for a LoCation Services, LCS, target.

The positioning node 350 is further configured to use the at least two image objects and/or the image data for positioning the first wireless device 331.

This may be performed by a **using module 803** comprised in the positioning node 350.

In some embodiments, to use the at least two image objects and/or the image data comprises to process the image data.

In some embodiments, to use the at least two image objects and/or the image data comprises to obtain the positioning result using the image data or results of processing the image data.

In some embodiments, to use the at least two image objects and/or the image data comprises to signal the positioning result to another node 310, 331, 332 configured to operate in the radio communications network 300, as described in action 505d.

In some embodiments, to signal the positioning result further comprises to signal the obtained positioning QoS.

In some embodiments, the positioning node 350 may be further configured to send the assistance data to the one of: the network node 310, the first wireless device 331, the second wireless device 332, the camera device, the image processing node and the server, for obtaining the image data.

This may be performed by a **sending module 804** comprised in the positioning node 350.

The embodiments herein using the image data for positioning the first wireless device 331 may be implemented through one or more processors, such as the **processing module 805** in the positioning node 350 depicted in Figure 8, together with computer program code for performing the functions and actions of the embodiments herein. The program code mentioned above may also be provided as a computer program product, for instance in the form of a data carrier carrying computer program code for performing the embodiments herein when being loaded into the in the positioning node 350. One such carrier may be in the form of a CD ROM disc. It may be however feasible with other data carriers such as a memory stick. The computer program code may furthermore be provided as pure program code on a server and downloaded to the positioning node 350.

The positioning node 350 may further comprise a **memory module 806** comprising one or more memory units. The memory module 806 may be arranged to be used to store data in relation to applications to perform the methods herein when being executed in the positioning node 350. Memory module 808 may be in communication with the processing module 805. Any of the other information processed by the processing module 805 may also be stored in the memory module 806.

In some embodiments, information may be received from, e.g., the network node 310 or the first wireless device 331, through a **receiving port 807.** In some embodiments, the receiving port 807 may be, for example, connected to the one or more antennas in the positioning node 350. In other embodiments, the positioning node 350 may receive information from another structure in the radio communications network 300 through the receiving port 807. Since the receiving port 807 may be in communication with the processing module 805, the receiving port 807 may then send the received information to the processing module 805. The receiving port 807 may also be configured to receive other information.

The information processed by the processing module 805 in relation to the embodiments of method herein may be stored in the memory module 806 which, as stated earlier, may be in communication with the processing module 805 and the receiving port 807.

The processing module 805 may be further configured to transmit or send information to e.g., the network node 310 or the first wireless device 331, through **a sending port 808,** which may be in communication with the processing module 805, and the memory module 806.

Those skilled in the art will also appreciate that the different modules 801-804 described above may refer to a combination of analog and digital modules, and/or one or more processors configured with software and/or firmware, e.g., stored in memory, that, when executed by the one or more processors such as the processing module 805, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the positioning node 350 are respectively implemented by means of a computer program product, comprising instructions, i.e., software code portions, which, when executed on at least one processor, cause the at least one processor to carry out the actions described herein, as performed by the positioning node 350. The computer program product may be stored on a computer-readable storage medium. The computer-readable storage medium, having stored thereon the computer program, may comprise instructions which, when executed on at least one processor, cause the at least one processor to carry out the actions described herein, as performed by the positioning node 350. In some embodiments, the computer-readable storage medium may be a non-transitory computer-readable storage medium.

Hence, in some embodiments, the different modules 801-804 described above may refer to respective applications running on one or more processors.

### Further detailed description relating to any suitable embodiment described above

### 1 Approach 1: Using Image Data for Positioning

According to this non-limiting aspect, the method to use image data for positioning may include:
- Step 1 - obtaining the at least two image objects and the angle between the lines formed between each of the objects and the reference point; and
- Step 2 - using the at least two image objects/data for positioning a wireless device, such as the first wireless device 331.

The image objects may be as described above. The image data may also include additional data, such as any one or more of:
- Angle between the image objects;
- Image data characteristics, e.g., size, quality color, etc.;
- Camera characteristics, e.g., type, capability, configuration, etc.;
- Radio measurements, e.g., cell ID, signal strength, a timing measurement, etc.;
- Environment indication, e.g., indoor/outdoor determined based on a sensor;
- Time of taking the picture, e.g., time of the day, day of the week, month, season, year;
- Location information if available, e.g., GPS location of the reference point or the last known location of the wireless device, area indication such as a tracking area ID, a local area ID, a cell ID, etc.

The reference point may include, among others, a location from where the image was taken with a camera.

In an embodiment, the angle may be pre-defined or may be determined by the type of the device, e.g., the first wireless device 331 or the second wireless device 332, taking the images. For example, many of the devices, such as the first wireless device 331 or the second wireless device 332, may have a possibility to take pictures in both, opposite, directions, i.e., with the angle of 180 degrees. In another example, the angle may be configurable or acquired, from configuration data, database, device, etc... The angle information may be obtained together with or in relation to the at least two image objects, may be determined based on a pre-defined rule or acquired from a database. In yet another example, the angle of each image may be with respect to a pre-defined direction, e.g., with respect to geographical North, so it may be straightforward to determine the angle between the two pictures too.

Since an image may be of a large area, the direction determining the angle may be with respect to a certain location comprised in the image, e.g., a center point. In another example, the angle, e.g., direction towards a sight or a geographical object, may also be the corresponding camera direction. The angle may be horizontal, vertical, or both. The angle may be absolute or relative.

The above steps may be implemented in a device, such as the first wireless device 331 or the second wireless device 332, or a network node, such as the network node 310, and may involve one or more nodes, such as any of the network node 310, the first wireless device 331, the second wireless device 332, and the positioning node 350.

### 1.1 Approach 1, Step 1 - Obtaining the Image Objects and Angles

The step of obtaining the image objects may comprise any one or more of:
- Taking one or more pictures:
   o Automatically, e.g., in a machine-to-machine communication or in vehicle communication system;
   o With or without user interaction;
   o In conjunction with other user activities, e.g., the user may be taking pictures for other purposes;
- Extracting two or more image objects from a wider-view pictures. For example, a pair of image objects at a certain angle with respect to a reference point may be extracted from a panoramic view picture;
- Receiving pictures from another node, such as any of the network node 310, the first wireless device 331, the second wireless device 332, and the positioning node 350, depending on the node performing the method;
- Selecting an image set from a pre-defined set of images, e.g., acquired from a database and/or received or indicated in the assistance data.

The step of obtaining the image object may be performed:
- Periodically or according to a schedule;
- Upon request or configuration, e.g., by an application, from another node , such as any of the network node 310, the first wireless device 331, the second wireless device 332, and the positioning node 350 or device, , such as the first wireless device 331 or the second wireless device 332, depending on the node performing the method;
- Upon a triggering condition;
- Upon a triggering event.

Step 1 may be implemented in:
- a device, e.g., the first wireless device 331, the second wireless device 332, a camera taking pictures upon a request, e.g., from an application or from another node, such as any of the network node 310, the first wireless device 331, the second wireless device 332, and the positioning node 350, which may be a wireless device itself, may be comprised in a wireless device, or may be able to communication with a wireless device or another node;
- a wireless device, such as the first wireless device 331 or the second wireless device 332;
- a radio network node such as the network node 310, e.g., eNodeB;
- an image processing function or node, e.g., device/node capable of image recognition and/or image comparison/mapping, such as the positioning node 350;
- a server, physical or logical.

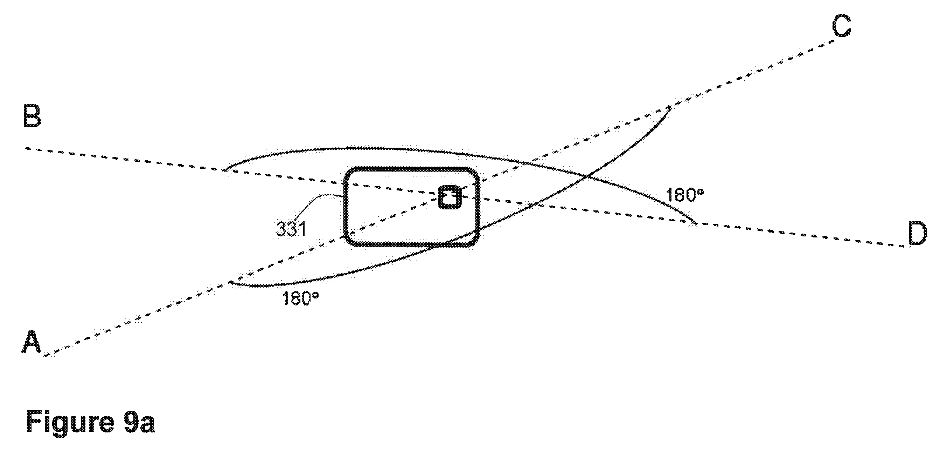

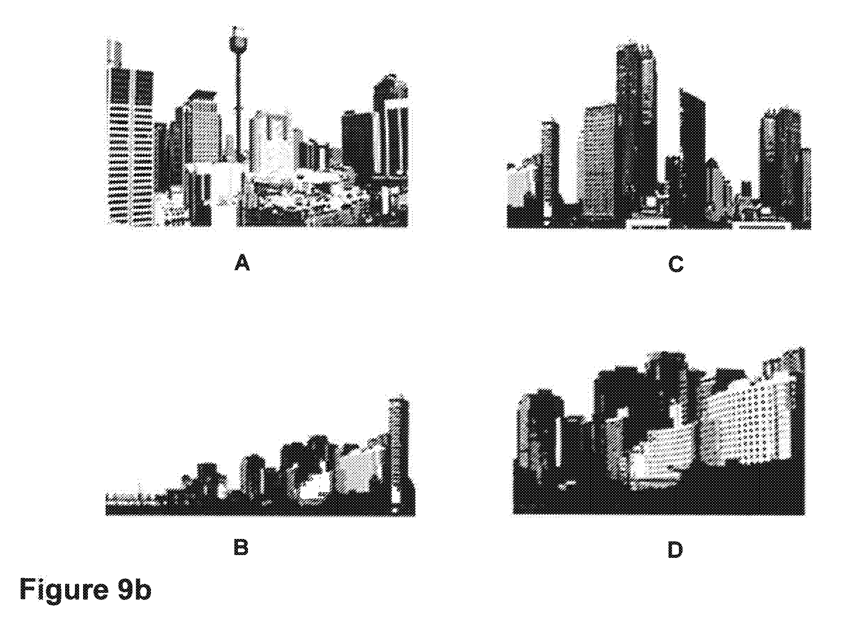

**Figure 9a** illustrates an example of a device when two pairs of images, e.g., pictures, pair A,C and pair B,D were obtained from the same location. Pictures A, C, B and D are shown in **Figure 9b****.** Each pair comprises two images in the strictly opposite directions with respect to the device, e.g., the first wireless device 331, i.e., the device is on a line connecting the locations illustrated in the two corresponding pictures, e.g., connecting the center points of the locations in the pictures, and the camera has been rotated to obtain the second pair.

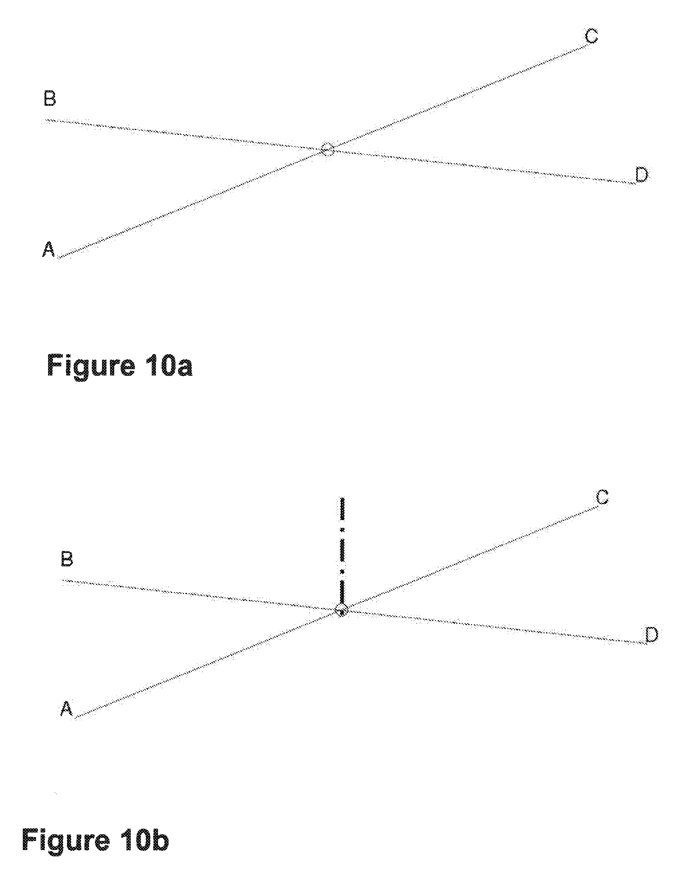

A particular advantage of taking pictures in the opposite directions, i.e., 180 degrees, may be that it is known that the camera is located exactly between the two locations illustrated in the pictures. Having two such pairs of the pictures taken from the same location may uniquely identify the device location, see **Figures 10a** and **10b****,** which are described further down. This may reduce or avoid the need for knowing the zoom factor, camera focus, characteristics of the camera lens, and possible image transformation applied in the picture.

### 1.2 Approach 1, Step 2 - Using the Images Objects for Positioning

Using the image objects for positioning may include any one or more of:
- Signaling the image data to another node, such as any of the network node 310, the first wireless device 331, the second wireless device 332, and the positioning node 350, for positioning purpose, e.g., to the wireless device associated with the camera device, such as the first wireless device 331, to a positioning node, such as the positioning node 350, or to an image processing node, such as the network node 310, etc.;
- Providing the image data to an application, e.g., to the application requesting/configuring taking the pictures;
- Storing in a database used for positioning:
   ∘ The database may comprise and/or be associated with radio measurements and/or Radio Frequency (RF) fingerprints, e.g., a database for AECID, RF pattern matching, etc.;
   ∘ The obtained image data may be stored together with the location information, including:
      ▪ location information received together with image data which may be stored to obtain location information of other devices;
      ▪ location information obtained based on these image data, e.g., the positioning result.
- Processing the image data to obtain location-related data, including any one or more of, in any order:
   ∘ Classifying the image data, e.g., to narrow down the image database search - classifying may also be based on other data associated with/comprised in the image data, such as time, cell ID(s), radio measurements, etc.;
   ∘ Identifying one or more candidate image objects for comparison from the available database of image objects;
   ∘ Matching, e.g., comparing and/or finding similarity, the image objects comprised in the image data to the one or more candidate image objects;
   ∘ Recognizing one or more objects, e.g., signs, buildings, etc., comprised in the image data, i.e., based on pattern recognition or image recognition;
- Using the image data or results of processing the image data to obtain a positioning result:
   ∘ a set of absolute or relative coordinates,
   ∘ an encoded location,
   ∘ an indication of the area of location,
   ∘ a positioning result represented by any of a pre-defined shape, e.g., a Geographical Area Description (GAD) shape defined in 3GPP TS 23.032 V11.0.0 "Universal Geographical Area Description (GAD)"
   ∘ See Embodiment herein 2 for more details and examples
- Signaling of positioning result obtained based on the image data to another node, e.g., to the LCS Client.

### 2 Embodiment herein 2: Position Estimation Based On At Least Two Images

Herein, a non-limiting example of positioning method for obtaining a positioning result based on at least two image objects is described. Note that the method may be extended for the use in hybrid positioning, e.g., combining image data with other measurements, e.g., timing measurements such as timing advance or Round-Trip Time (RTT), received signal strength or quality, AoA measurements, etc.. This implies that the image data may be used together, simultaneously or in any sequence, with at least one radio measurement, CID may be considered as a radio measurement, to obtain a position and/or image data may be signaled together with at least one radio measurement and/or the image data may be stored together with at least one radio measurement in a database used for positioning. The embodiments described herein may be also combined with embodiments described in Embodiment herein 1.

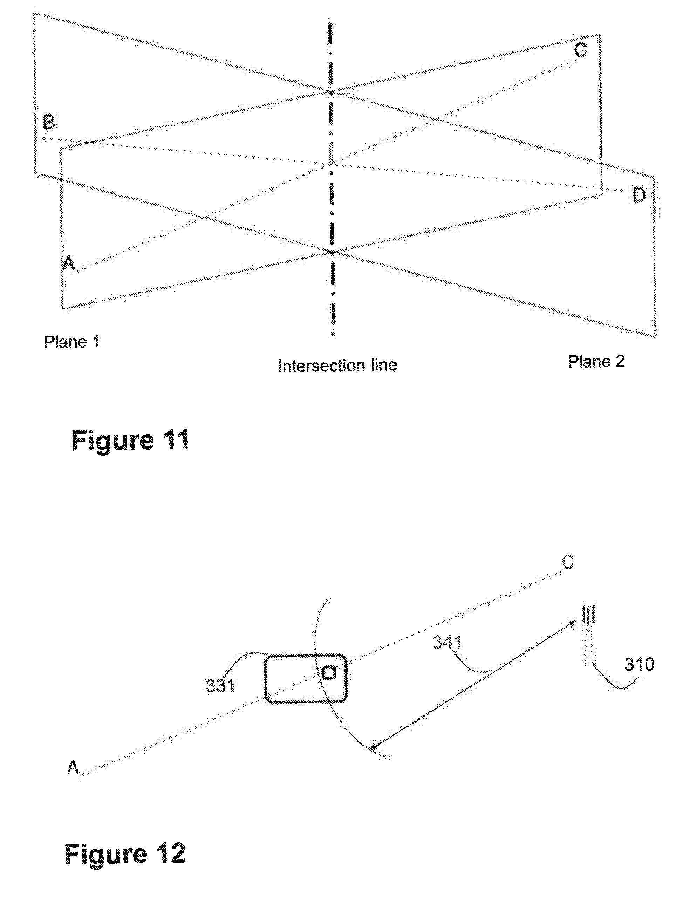

Figures 10a and 10b illustrate examples of two Dimensional (2D) and three Dimensional (3D) positioning results, respectively, based on the two pairs of image objects A,C and B,D, illustrated in Figures 9a and 9b. Figure 10a illustrates an example of finding a 2D position of the device, e.g., the first wireless device 331, the position of which is represented in the figure by the circle in the intersection of the lines, with uncertainty equal to the circle radius. The two horizontal lines between reference objects are represented with continuous lines because in this case, their position is known. Figure 10b illustrates an example of finding a 3D position of the device, e.g., the first wireless device 331, e.g., a vertical dashed line. In the figure, the vertical bold dashed line marks the intersection line of the vertical planes between the pair of images A,C and B,D, in the figure. The position of the device, e.g., the first wireless device 331, is represented in the figure by the circle in the intersection of the lines, with uncertainty equal to the circle radius. The two horizontal lines between reference objects are represented with continuous lines because in this case, their position is known. Thus, the position of the device, e.g., the first wireless device 331 is derived from the intersection of the lines. **Figure 11** illustrates an example of finding a 3D position of the device when the vertical angles, that is, the angles between e.g., the line AC and the strictly vertical line, i.e., a normal, e.g., a line perpendicular to e.g. the earth surface, are unknown. That is, the two horizontal lines between the reference objects are known to be somewhere within the corresponding vertical plane. Since their position is not entirely known, they are represented in the figure as dashed lines. Thus, the position of the device, e.g., the first wireless device 331 is derived from the intersection of the planes. In the figure, the vertical bold dashed line marks the intersection line of the vertical planes, containing the lines AC and BD, respectively, between the pair of images A,C and B,D, in the figure, Plane 1 and Plane 2, respectively.

In practice, other positioning methods, e.g., pattern matching, may be very sensitive to device, e.g., the first wireless device 331, orientation since this may determine e.g., the body impact on the received signal, which is invisible to the user, i.e., the user of the device, such as the first wireless device 331. The body impact may comprise the additional path loss in the radio signal path due to the human body, e.g., when holding a mobile in a hand against the head. However, with the approach illustrated in Figures 9a-10b, the vertical angle of the camera may be less important, since, as clarified in Figures 10a and 10b, the imaginary lines may be in either way comprised in the same vertical plane, and it is the intersection of the two planes which may justify the way of obtaining the 3D result in Figure 10b, i.e., obtain first the horizontal location, and then assume that the device, e.g., the first wireless device 331, is located on a line perpendicular to the horizontal surface.

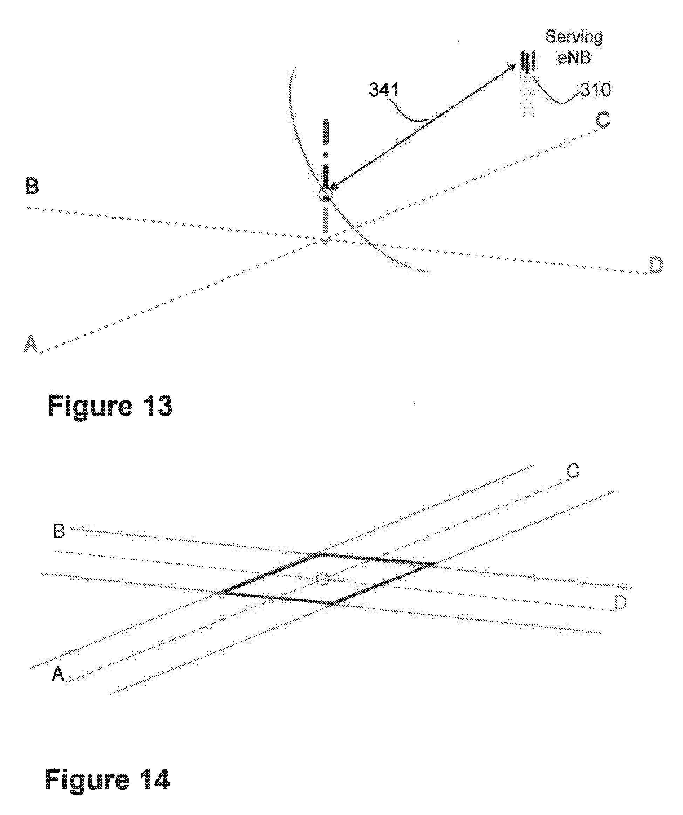

A more accurate 3D location may be further determined, e.g., based on analyzing the image objects angles or using hybrid positioning, see e.g., **Figures 12-13****.** Figure 12 illustrates an example of hybrid positioning based on two pictures, i.e., A and C, taken at a 180° angle, and a timing and/or distance measurement with respect to a serving eNB, e.g., the network node 310 of the wireless device, e.g., the wireless device 331, being located. The timing and/or distance measurement forms an intersecting arc, represented by the continuous curved line in the figure. For example, if the location of a wireless device M, such as the first wireless device 331, is not known, but a distance to a fixed point N , such as the network node 310, is known, then the possible locations of M lie on a circle around N with a radius equal to the distance; the circle may further be limited to a part of it, i.e., an arc, when some more information, even though not exact location of M, about the direction of M with respect to N is available. The location of the horizontal lines between the reference objects is not known, and it is therefore represented as a dashed line. The serving eNB, e.g., the network node 310, which communicates with the first wireless device 330 via the first radio link 341, is represented in this figure. Figure 13 illustrates an example of finding a 3D position, e.g., small circle, of the device, e.g., the first wireless device 331, using hybrid positioning, e.g., with timing and/or distance measurement. The vertical bold dashed line marks the vertical line from the intersection point of the two horizontal lines. The circle represents the location of the device, e.g., the first wireless device 331. The continuous curved line represents a timing and/or distance measurement, forming an intersecting arc. The serving eNB, e.g., the network node 310, which communicates with the first wireless device 330 via the first radio link 341, is represented in this figure.

### 3 Embodiment herein 3: Signaling and Procedural Enhancements to Support Image-Based Positioning

Herein, but also in any of the approaches 1-4, the image-based positioning method may comprise any one or any combination of:
- Method 1 - Obtaining a positioning result, see e.g., "positioning result" in the background or Embodiment herein 1, or determining movement characteristics, e.g., movement direction, speed, vehicle type, of a target wireless device, e.g., the first wireless device 331, based at least on one or more of image data sets obtained at the target device's, e.g., the first wireless device 331, location towards other objects, see e.g., Figures 9a and 9b;
- Method 2: Obtaining a positioning result, see e.g., "positioning result" in the background or Embodiment herein 1, or determining movement characteristics, e.g., movement direction, speed, vehicle type, of a target object based at least on one or more of image data sets, wherein the at least one set is comprising the target object, example: automated security camera built into a radio network node, such as the network node 310, comprised in a wireless communications network such as the radio communications network 300:
   o As an example, an object location may be determined by comparing a picture with the object with a picture without the object, wherein the picture illustrates a known area, so that the object location may be determined based on the location of the object in the picture;
- Method 3: Obtaining a subset of pre-defined image sets, e.g., the indicators thereof, that are selected to a certain rule, e.g., illustrating the sights closest to the user location, the pre-defined image sets may be obtained in different ways, e.g., acquired from a database or provided in the assistance data - see also a separate section on the assistance data. An advantage of this method may be that it does not require a camera.

### 3.1 Selection of Image-Based Positioning Method(s)

A positioning node, e.g., the positioning node 350, may support a range of positioning methods, e.g., any one or more of: GPS, GNSS, A-GNSS, OTDOA, UTDOA, E-CID, pattern matching, AECID, etc. so image, or image recognition, based positioning may comprise a separate positioning method. As described in other approaches, it may also be comprised in a hybrid positioning method.

Selection of the image-based positioning may be based e.g., on any one or more of:
- Capability associated with image-based positioning, see a separate section, of the positioning node, e.g., the positioning node 350, and the involved nodes, e.g., the nodes that may be expected to provide the image data, such as any of the network node 310, the first wireless device 331, the second wireless device 332, and the positioning node 350;
- Client Type, e.g., a new Client Type may be introduced which may be associated with image-based positioning; the Client Type may be typically received by the positioning node, e.g., the positioning node 350, from another node, such as any of the network node 310, the first wireless device 331, the second wireless device 332, and the positioning node 350, or from the LCS Client in i.e., the positioning node 350, together with a positioning request or prior selecting a positioning method;
- Service Type, e.g., a new Service Type may be introduced in the standard or configured by an operator which may be associated with image-based positioning; the Service Type, e.g., emergency or commercial application is typically received by the positioning node, e.g., the positioning node 350, from another node, such as any of the network node 310, the first wireless device 331, the second wireless device 332, and the positioning node 350, or from the LCS Client in i.e., the positioning node 350, together with a positioning request or prior selecting a positioning method;
- Expected accuracy which may be achieved with the image-based positioning;
- Target positioning QoS requested in a positioning request;
- Landmark characteristics, e.g., based on a cell ID, the positioning node, e.g., the positioning node 350, may know approximately the area of the device, e.g., the first wireless device 331, and the success probability of the image-based positioning;
- Environment, time of the day, e.g., image-based positioning may be challenging outdoors during a night, season;
- Expected complexity, expected resource consumption, energy, memory, etc., and/or available resources for image-based positioning, e.g., at the node using the image data and/or at the node obtaining the raw image data;
- Image database completeness;
- Availability of other positioning methods and whether any of the methods have already been tried for the LCS target.

In one example, image-based positioning may be selected to obtain image data for further calculation of the location for the same device, e.g., the first wireless device 331.

In another example, image-based positioning may be selected to obtain image data in conjunction with a high-accuracy positioning method, e.g., GPS, GNSS, A-GNSS, OTDOA, etc., for collecting the image data together with the known location and using the collected image data for positioning of other devices, such as the second wireless device 332.

### 3.2 Capability Signaling

In an aspect, capability data associated with image-based positioning may be communicated between two nodes, such as any of the network node 310, the first wireless device 331, the second wireless device 332, and the positioning node 350:
- From one device, e.g., the first wireless device 331 to another device, e.g., the second wireless device 332, wherein a wireless device, such as any of the first wireless device 331 or the second wireless device 332, is a special case of a device; in one example, at least one of the devices may be a wireless device, such as any of the first wireless device 331 or the second wireless device 332, - e.g., via device-to-device communication interface(s), machine-to-machine communication interface(s), via a wireless or a non-radio interface, etc.;
- From one wireless device, such as any of the first wireless device 331 or the second wireless device 332, to a radio network node, such as the network node 310;
- From one radio network node, such as the network node 310, to another radio network node;
- From one radio network node, such as the network node 310, to another network node not equipped with a radio interface, e.g., positioning node, such as the positioning node 350, SLP, MME, O&M, SON node, MDT node;
- From a wireless device, such as any of the first wireless device 331 or the second wireless device 332, to a network node not equipped with a radio interface, e.g., to a positioning node, such as the positioning node 350, SLP, etc. - e.g., via LPP or LPPe;
- From one network node, such as the network node 310, to another network node, e.g., from MME to positioning node, from one positioning node, such as the positioning node 350, to another positioning node, from SLP to E-SMLC, etc.

The capability data associated with image-based positioning may comprise, e.g., one or more of:
- Ability to use one or more image data sets for positioning purpose, e.g., to obtain one or more positioning results;
- Image recognition capability or image processing capability;
- Ability to obtain, e.g., receive the data or make a picture; see also Embodiment herein 1 and/or provide the data associated with image-based positioning;
- Ability to store images for the purpose of positioning;
- Support for Method 1, Method 2, Method 3, a combination or them, or all.

The capability data may also comprise such additional data as, e.g., any one or any combination of the below:
- Image data types, e.g., file formats;
- Maximum number of images;
- Maximum image resolution or quality;
- Maximum picture size, e.g., width and height in pixels;
- Color schemes, e.g., black and white, basic color set, extended color set, etc., or color coding;
- Maximum image data size, e.g., up to 1 MegaByte (MB), 2 MB, 5 MB, or more, e.g., per image data set or in total for several image data sets;
- Maximum image recognition capability or capacity;
- Maximum image processing capability or capacity;
- Ability to handle one or more of picture transformations, e.g., digital or optical zoom, rotation, etc.;
- Ability to handle wide-view pictures, e.g., 180 degrees pictures or 360 degrees pictures.

The capability data may also be comprised in a specific node type, category, or a pre-defined configuration. Hence signaling of this information, type, category, configuration indicator, etc., may comprise also signaling of the capability data.

Based on the capability data, the node obtaining the capability may use it, e.g., for:
- Select/not select a positioning method using image data;
- Allocate resources for image processing;
- Allocate resources, e.g., message size or transport block size, transmission bandwidth, bearer, etc., for image data communication;
- Adaptively selecting an image processing function;
- Compare the obtained capability with the capability of another node, such as any of the network node 310, the first wireless device 331, the second wireless device 332, and the positioning node 350, e.g., whether both positioning node, e.g., the positioning node 350, and wireless device, such as any of the first wireless device 331 or the second wireless device 332, support image-based positioning.

### 3.3 Assistance Data for Obtaining Image Data

According to one embodiment, a node, such as any of the network node 310, the first wireless device 331, the second wireless device 332, and the positioning node 350, or a function within the node, may provide assistance data or a request to another node, such as any of the network node 310, the first wireless device 331, the second wireless device 332, and the positioning node 350, or a function within the same node, to assist obtaining the image data for positioning purpose. In one example, the assistance data may be provided in response to the obtained capability data.

The assistance data/request may comprise, e.g., recommend or request, e.g., any one or more of:
- Number of image data sets, e.g., pictures;
- Resolution or image data set quality;
- Image data size, e.g., based on the radio link capacity or image recognition capacity;
- Direction of taking pictures, e.g., north, south, etc.;
- Color scheme;
- Image data type;
- Configuration parameters for camera, device/hardware/software taking the picture, zoom type, zoom factor, focal distance, flash on/off, transformation on/off, orientation, e.g., horizontal/vertical, sensitivity level, etc.;
- Instructions or one or more of the guidelines or commands to a user or device, e.g., a human or a machine, assisting in obtaining the image data.

In another embodiment, the assistance data may comprise, a set of reference image data sets. The user may select one or more image data sets according to a rule, e.g., select pictures with the sights closest to the user location or form two opposite sides, e.g., front and back; left and right. The assistance data may comprise also one or more rules and/or instructions to the user.

In yet another embodiment, the assistance data may comprise, one or more references to pre-defined image data sets, stored in a local database, a database retrieved from another device or node, etc... The reference may be selected based on the cell ID of the cell where a wireless device, e.g., the first wireless device 331, is located.

### 3.4 Image Data Reporting

According to this embodiment, a node, such as any of the network node 310, the first wireless device 331, the second wireless device 332, and the positioning node 350, or a function within the node, may provide the image data to another node, such as any of the network node 310, the first wireless device 331, the second wireless device 332, and the positioning node 350, for the purpose of positioning or to another function within the same node for the purpose of positioning. The involved nodes and interfaces may be similar to those described for capability exchange. In one example, the image may be provided by a device to a positioning server or another device, e.g., any of the first wireless device 331 or the second wireless device 332.

The image data may be an image file. In another example, it may also be one or more references to pre-defined image data sets, selected from a database, from the received assistance data, etc.

The image reporting may be upon a request, upon availability, periodic, or event-triggered, e.g., upon a delivery of the image data to an application layer, etc.

The image data may also comprise additional data or assistance data for image processing may include among others any one or more of:
- Configuration, zoom, focal distance, flash on/off, etc., or type of the device taking the picture;
- Image data characteristics, resolution, size, format, color scheme, number of images, transformation if any, etc.;
- Time, time of the day, week, month, season, year, etc.;
- Environment type, e.g., indoor or outdoor; light characteristics, etc. - e.g., determined based on sensors, in one example the same sensors may be used when taking a picture and when determining environment type.

The above additional information may be obtained with sensors and/or by acquiring from a stored configuration associated with the image data and may be used e.g., for configuring or optimizing image processing or image recognition, e.g., time of the day determines also type of light.

As mentioned earlier, in some embodiments, the image data may also be provided together with at least one radio measurement.

### 4 Approach 4: Obtaining Positioning QoS for Image-Based Positioning

Typically, positioning QoS information, uncertainty, confidence, etc., may be provided together with a prior-art positioning result such as the result obtained with GPS, OTDOA, etc..

Obtaining a positioning result QoS for image-based positioning is described herein. In an aspect, one or more of QoS characteristics may be obtained and/or included in a positioning result obtained based on image-based positioning. Horizontal uncertainty, vertical uncertainty, and a confidence level are some examples of QoS characteristics. The QoS characteristics may be included in a positioning result, e.g., when described by a predefined shape, e.g., a GAD shape as described in 3GPP TS 23.032 V11.0.0 "Universal Geographical Area Description (GAD)".

The QoS characteristics may be obtained as a function of and/or based on any one or more of:
- Proximity of the objects comprised in the image data sets to the device taking the pictures, e.g., the first wireless device 331;
- The true distance between the objects comprised in different image sets characterizing a device, e.g., the first wireless device 331, location, e.g., the larger the distance, the larger uncertainty is;
- The true distance between the objects comprised in the same image sets characterizing a device, e.g., the first wireless device 331, location, e.g., size of the area captured in the picture - the larger size the larger uncertainty is;
- Zoom factor, e.g., no zoom or small zoom may be associated with a smaller uncertainty;
- Number of image data sets;
- Quality of the image data sets;
- Quality/accuracy of the image recognition, e.g., may be associated with processing time - longer processing gives more accurate result;
- Accuracy of the angle between the two directions of the pictures, see e.g., Embodiment herein 1;
- Transformation of the pictures used for image-based positioning, e.g., objected in the transformed pictures may be more difficult to recognize;
- Number of available reference images data sets characterizing the area, larger number may increase the confidence level;
- Similarity or uniqueness characteristics of the objects comprised in the image data sets used for image-based positioning of a target, e.g., similarity may be high in an office indoor environment - all doors in the corridor may look the same.

As an illustration, consider positioning result obtained according to the principle illustrated in Figure 10a. Assume no transformation and high quality of the figures. **Figure 14** illustrates Figure 10a with the uncertainty taken into account. In Figure 14, the uncertainty level is represented in the width of the each of the strips, represented by the continuous lines between A and C, and B and D, which in turn depends e.g., on the area size of captured in the pictures A, B, C, D, see Figures 9a and 9b. Figure 14 illustrates an example of finding a 2D position of the device, e.g., the first wireless device 331. The location of the device, e.g., first wireless device 331 is represented in the figure as a circle, with the uncertainty of the location being equal to the circle radius. An uncertainty polygon is represented in bold - the intersection of the two strips. The dashed lines represent lines between reference objects bound from both sides by lines corresponding to the uncertainty of the dashed lines.

### 5 Apparatuses That May Implement Methods to Support and Enhance Image-Based Positioning

The methods described herein may be implemented statically, semi-statically or dynamically. In each case, they may be implemented in a radio node, such as the network node 310, a wireless device, such as the wireless device 331, 332, a device, radio network node, such as the network node 310, a network node, such as the network node 310, a positioning node, such as the positioning node 350, a measuring node, and a coordinating node, among others. The nodes need not be separate. That is, a single apparatus may be configured to perform functions of multiple nodes.

### 5.1 Network node 310

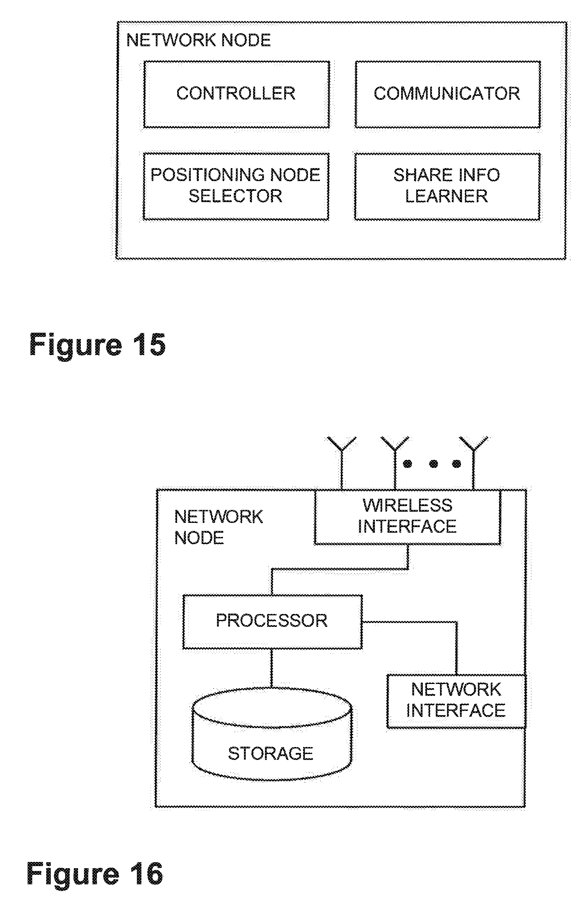

As illustrated in **Figure 15****,** an example network node 310 may include a controller, a communicator, a positioning node selector, and a share info learner.

The communicator may be configured to perform wired and/or wireless communication with other nodes, such as any of the network node 310, the first wireless device 331, the second wireless device 332, and the positioning node 350, and/or devices, such as the first wireless device 331 or the second wireless device 332, using any of the protocols as described above. The positioning node selector may be configured to select a positioning node 350, as described above. The share info learner may be configured to learn any one or more of the sharing capability, capacity, and configuration of one or more measuring nodes and devices, such as the first wireless device 331 or the second wireless device 332. The controller may be configured to control the overall operation of the network node 310.

Figure 15 provides an example logical view of the network node 310 and the circuits, which may alternatively be denoted modules, devices or units, included therein. It is not strictly necessary that each circuit be implemented as physically separate modules. Some or all circuits may be combined in a physical module.

Also, the circuits of the network node 310 need not be implemented strictly in hardware. It is envisioned that the circuits may be implemented through any combination of hardware and software. For example, as illustrated in Figure 16, the network node 310 may include a processor, a storage, internal, external, or both, and one or both of a wireless interface, e.g., in case of a radio node, and a network interface, in case of a radio network node or a core network node. The processor may be configured to execute program instructions to perform the functions of one or more of the network node circuits. The instructions may be stored in a non-transitory storage medium or in firmware, e.g., Read-Only Memory (ROM), Random-Access Memory (RAM), Flash, denoted as storage. Note that the program instructions may also be received through wired and/or or wireless transitory medium via one or both of the wireless and network interfaces. The wireless interface, e.g., a transceiver, may be configured to receive signals from and send signals to other radio nodes via one or more antennas. Not all network nodes 310 may be equipped with a radio interface and radio antennas, e.g., core network nodes. The network interface may be included and configured to communicate with other radio and/or core network nodes.

### 5.2 Positioning node 350

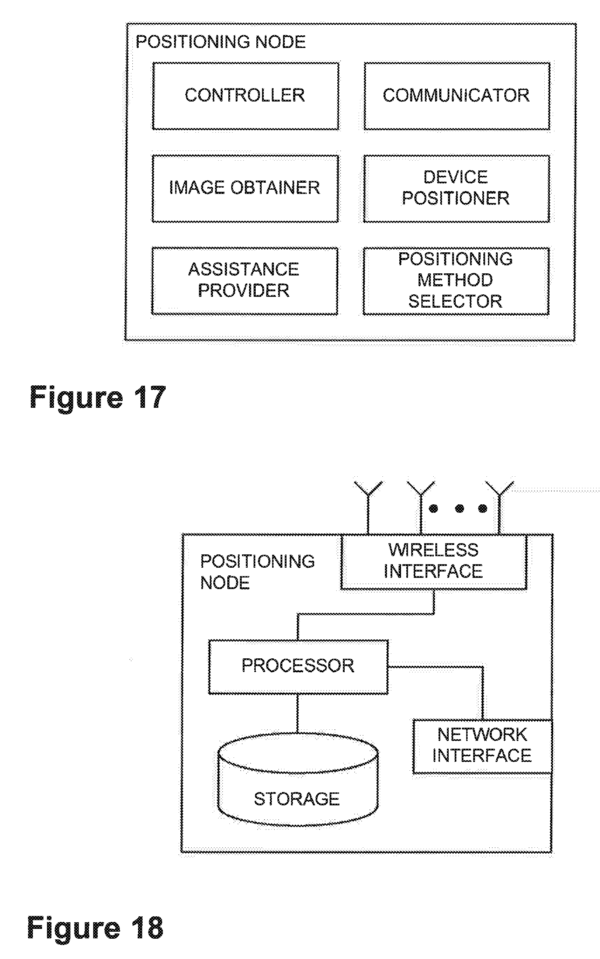

As illustrated in **Figure 17****,** an example positioning node 350 may include a controller, a communicator, an assistance data provider, an image obtainer, a positioning method selector, and a device positioner.

Figure 17 provides a logical view of the positioning node 350 and the circuits included therein. It is not strictly necessary that each circuit be implemented as physically separate modules. Some or all circuits may be combined in a physical module.

The circuits of the positioning node 350 need not be implemented strictly in hardware. It is envisioned that the positioning node 350 circuits can be implemented through any combination of hardware and software. For example, as illustrated in **Figure 18****,** the positioning node 350 may include a processor, a storage, and one or both of a wireless interface and a network interface. The processor may be configured to execute program instructions to perform the functions of one or more of the positioning node 350 circuits. The instructions may be stored in a non-transitory storage medium or in firmware. The program instructions may also be received through wired and/or or wireless transitory medium via one or both of the wireless and network interfaces. The wireless interface may be configured to receive signals from and send signals to other radio nodes, such as the network node 310, via one or more antennas. Not all positioning nodes may be equipped with a radio interface and radio antennas. For example, core network nodes may serve as positioning nodes 350, e.g., E-SMLC, SLP. The network interface may be configured to communicate with other radio and/or core network nodes.

### 5.3 Measuring node

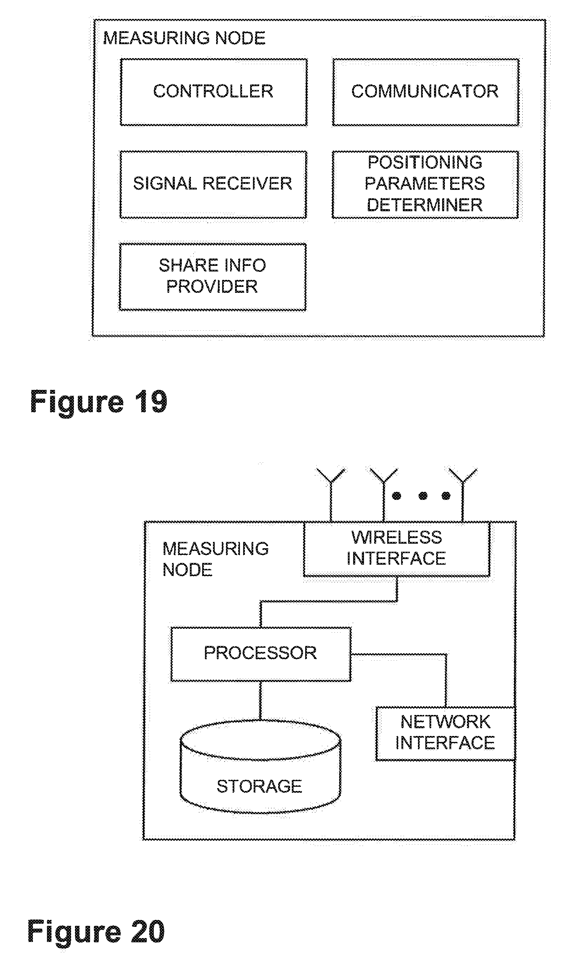

As illustrated in **Figure 19****,** an example measuring node may include a controller, a communicator, a signal receiver, a positioning parameter measurer, and a share info provider.

The communicator may be configured to perform wired and/or wireless communication with other nodes, such as any of the network node 310, the first wireless device 331, the second wireless device 332, and the positioning node 350, and/or wireless devices, such as any of the first wireless device 331 or the second wireless device 332, using any of the protocols as described above. The signal receiver may be configured to receive one or more signals, e.g., SRS, from which positioning measurements may be made. The positioning parameter measurer may be configured to perform measurements of one or more positioning parameters, e.g., image-based, timing-based, power-based, hybrid, of the received signals. The share info provider may be configured to provide any one or more of the measuring node's sharing capability, capacity, and configuration to one or more other nodes, such as any of the network node 310, the first wireless device 331, the second wireless device 332, and the positioning node 350, and/or wireless devices, such as any of the first wireless device 331 or the second wireless device 332. The controller may be configured to control the overall operation of the measuring node.

Figure 19 provides a logical view of the measuring node and the circuits included therein. It is not strictly necessary that each device be implemented as physically separate modules. Some or all devices may be combined in a physical module.

Similar to the network and positioning nodes, the devices of the measuring node can be implemented through any combination of hardware and software. For example, as illustrated in **Figure 20****,** the measuring node may include a processor, a storage, a wireless interface, and a network interface. The processor may be configured to execute program instructions to perform the functions of one or more of the measuring node circuits. The instructions may be stored in a non-transitory storage medium or in firmware. The instructions may also be received through wired and/or or wireless transitory medium via one or both of the wireless and network interfaces. The wireless interface may be configured to receive signals from and send signals to other radio nodes via one or more antennas. The network interface may be configured to communicate with other radio nodes, such as any of the network node 310, the first wireless device 331, the second wireless device 332, and the positioning node 350, and/or core network nodes.

### 5.4 Coordinating node

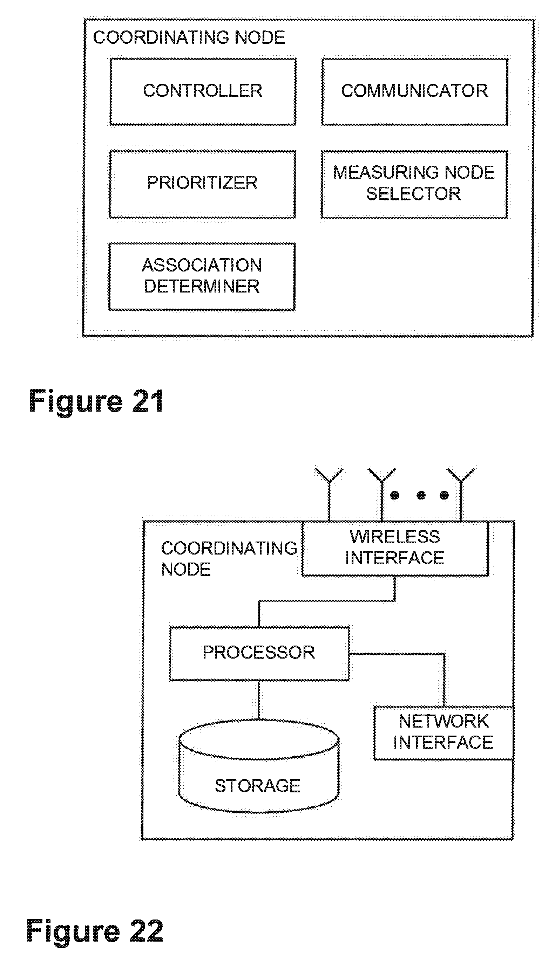

As illustrated in **Figure 21****,** an example coordinating node may include a controller, a communicator, a prioritizer, a measuring node selector, and an association determiner. The communicator may be configured to perform wired and/or wireless communication with other nodes, such as any of the network node 310, the first wireless device 331, the second wireless device 332, and the positioning node 350, and/or devices, such as any of the first wireless device 331 or the second wireless device 332, using any of the protocols as described above. The prioritizer may be configured to prioritize among the positioning nodes 350 and measuring nodes. The measuring node selector may be configured to select a set of measuring nodes. The association determiner may associate and/or determine associations among the measuring nodes and the positioning nodes 350. The controller may be configured to control the overall operation of the coordinating node.

Figure 21 provides a logical view of the coordinating node and the devices included therein. It is not strictly necessary that each device be implemented as physically separate modules. Some or all devices may be combined in a physical module.

The circuits of the coordinating node can be implemented through any combination of hardware and software. For example, as illustrated in **Figure 22****,** the coordinating node may include a processor, a storage, a wireless interface, and a network interface. The processor may be configured to execute program instructions to perform the functions of one or more of the coordinating node devices. The instructions may be stored in a non-transitory storage medium or in firmware. The instructions may also be received through wired and/or or wireless transitory medium via one or both of the wireless and network interfaces. The wireless interface may be configured to receive signals from and send signals to other radio nodes, such as any of the network node 310, the first wireless device 331, the second wireless device 332, and the positioning node 350, via one or more antennas. Not all coordinating nodes may be equipped with a radio interface and radio antennas, e.g., O&M node, P-GW, SON node, etc... The network interface may be configured to communicate with other radio nodes, such as any of the network node 310, the first wireless device 331, the second wireless device 332, and the positioning node 350, and/or core network nodes.

### 5.5 Wireless device

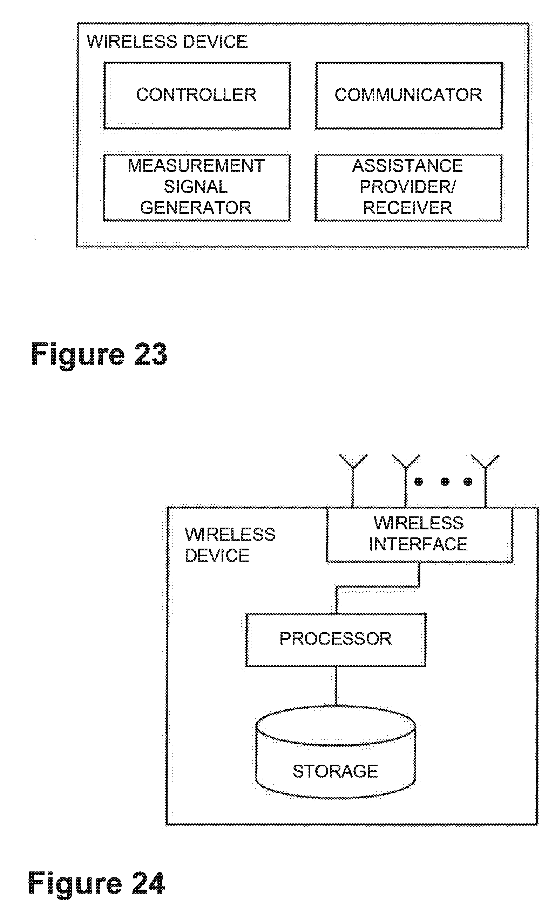

As illustrated in **Figure 23****,** an example wireless device 331, 332 may include a controller, a communicator, a measurement signal generator, and an assistance provider/receiver.

The communicator may be configured to perform wireless communication with other radio nodes, such as any of the network node 310, the first wireless device 331, the second wireless device 332, and the positioning node 350, and/or wireless devices, such as any of the first wireless device 331 or the second wireless device 332, using one or more of the protocols as described above. The measurement signal generator may be configured to generate signals used for measurement, e.g., SRS. Note that data signals may also be used for measurements. The assistance provider may be configured to provide assistance to any one or more of the network 310, positioning 350, measuring, and coordinating nodes for position measurement purposes. Note that for DL positioning, the wireless device 331, 332 may receive assistance data provided by a network node 310.

Figure 23 provides a logical view of the wireless device 331, 332 and the circuits included therein. It is not strictly necessary that each device be implemented as physically separate modules. Some or all circuits may be combined in a physical module.

The wireless device 331, 332 may be implemented through any combination of hardware and software. For example, as illustrated in **Figure 24****,** the wireless device 331, 332 may include a processor, a storage, and a wireless interface. The processor may be configured to execute program instructions to perform the functions of one or more of the coordinating node devices. The instructions may be stored in a non-transitory storage medium or in firmware. The instructions may also be received through a wireless transitory medium via the wireless interface. The wireless interface may be configured to receive signals from and send signals to other radio nodes via one or more antennas.

A non-exhaustive list of advantages of one or more aspects of the present disclosure may include:
- Simple positioning method(s) exploiting the ability of taking images and exploiting the advantages of image recognition;
- Being RAT-agnostic;
- Image-based positioning without the need for using camera by the positioning target, see e.g., Method 3 in Approach 3;
- Avoid performing radio measurements and the power of the wireless device 331, 332 may be saved, e.g., if another device, such as any of the first wireless device 331 or the second wireless device 332, is used to take images and communicate then the images to the wireless device 331, 332;
- More adaptive image-based positioning configuration through enhanced signaling and capability exchange;
- Obtain QoS characteristic for the image-based positioning result.

When using the word "comprise" or "comprising" it shall be interpreted as nonlimiting, i.e. meaning "consist at least of".

The modules described may be for performing any of the pertinent embodiments described.

The embodiments herein are not limited to the above described preferred embodiments. Various alternatives, modifications and equivalents may be used.

### Abbreviations

- 3GPP: 3^{rd} Generation Partnership Project
- ABS: Almost Blank Subframes
- BS: Base Station
- CID: Cell ID
- CRS: Cell-specific Reference Signal
- DL: Downlink
- eNodeB: evolved Node B
- E-SM LC: Evolved SMLC
- IE: Information Element
- LMU: Location Measurement Unit
- LPP: LTE Positioning Protocol
- LPPa: LPP Annex
- LPPe: LPP extensions
- LTE: Long-Term Evolution
- MDT: Minimization of Drive Tests
- MME: Mobility Management Entity
- OTDOA: Observed Time Difference of Arrival
- PCI: Physical Cell Identity
- PLMN: Public Land Mobile Network
- PRS: Positioning Reference Signal
- RF: Radio Frequency
- RRC: Radio Resource Control
- RSRP: Reference Signal Received Power
- RSRQ: Reference Signal Received Quality
- RSSI: Received Signal Strength Indicator
- SINR: Signal-to-Interference Ratio
- SLP: SUPL Location Platform
- SMLC: Serving Mobile Location Center
- SON: Self-Optimized Network
- SRS: Sounding Reference Signals
- SUPL: Secure User Plane Location
- UE: User Equipment
- UL: Uplink
- ULP: User plane Location Protocol
- UMTS: Universal Mobile Telecommunications System
- UTDOA: UL Observed Time Difference of Arrival

## Claims

1. A method in a radio communications network (300) of using image data for positioning a first wireless device (331), the first wireless device (331) operating in the radio communications network (300), the method comprising:
*signaling* (401) capability data associated with image-based positioning to another node (310, 331, 332, 350) operating in the radio communications network (300), enabling a positioning node (350) operating in the radio communications network (300) to:
obtain the capability data, and
select an image-based positioning method based on the obtained capability data,
*obtaining* (404) image data comprising at least two image objects and an angle between lines formed between each of the objects and a reference point, and
*using* (407) the at least two image objects and/or the image data for positioning the first wireless device (331) based on the angle in the obtained data,
wherein the method is performed by at least one of: a network node (310), the first wireless device (331), a camera device, a second wireless device (332), an image processing node and a server, each operating in the radio communications network (300).

2. The method of claim 1, wherein the two image objects are comprised in two different images or different image sets.

3. The method of any of claims 1-2, wherein using (407) the at least two image objects and/or the image data comprises *processing* (407a) the image data.

4. The method of any of claims 1-3, wherein using (407) the at least two image objects and/or the image data comprises *obtaining* (407c) a positioning result using the image data or results of processing the image data.

5. The method of any of claims 1-4, further comprising *receiving* (402) assistance data for obtaining the image data, from a node (310, 331, 332, 350) operating in the radio communications network (300).

6. The method of any of claims 1-5, wherein using (407) the at least two image objects and/or the image data further comprises *signaling* (407b) the image data and/or the at least two image objects and the angle between lines formed between each of the objects and a reference point to another node (310, 331, 332, 350) operating in the radio communications network (300) for positioning.

7. The method of any of claims 4-6, wherein using (407) the at least two image objects and/or the image data further comprises *signaling* (407) the positioning result based on the at least two image objects and/or the image data to another node (310, 331, 332, 350) operating in the radio communications network (300).

8. A method performed by a positioning node (350) of using image data for positioning a first wireless device (331), the positioning node (350) and the first wireless device (331) operating in a radio communications network (300), the method comprising:
*obtaining* (501) capability data associated with image-based positioning from one of: a network node (310), the first wireless device (331), a second wireless device (332), a camera device, an image processing node and a server, each operating in the radio communications network (300),
*selecting* (503) an image-based positioning method based on the obtained capability data,
*obtaining* (504) the image data and/or at least two image objects and an angle between lines formed between each of the objects and a reference point from the one of: the network node (310), the first wireless device (331), the second wireless device (332), the camera device, the image processing node and the server, wherein the image data comprises the at least two image objects and the angle between lines formed between each of the objects and the reference point, and
*using* (505) the at least two image objects and/or the image data for positioning the first wireless device (331).

9. A network node (310) for using image data for positioning a first wireless device (331), the network node (310) and the first wireless device (331) being configured to operate in the radio communications network (300), the network node (310) being configured to:
signal (401) capability data associated with image-based positioning to another node (331, 332, 350) configured to operate in the radio communications network (300), enabling a positioning node (350) operating in the radio communications network (300) to:
obtaining the capability data,
select an image-based positioning method based on the obtained capability data,
obtain the image data and/or at least two image objects and an angle between lines formed between each of the objects and a reference point, wherein the image data comprises the at least two image objects and the angle between lines formed between each of the objects and the reference point, and
use the at least two image objects and/or the image data for positioning the first wireless device (331).

10. A wireless device (331, 332) for using image data for positioning a first wireless device (331), the wireless device (331, 332) and the first wireless device (331) being configured to operate in the radio communications network (300), the wireless device (331, 332) being configured to:
signal capability data associated with image-based positioning to another node (310, 331, 332, 350) configured to operate in the radio communications network (300), enabling a positioning node (350) operating in the radio communications network (300) to:
obtaining the capability data,
select an image-based positioning method based on the obtained capability data,
obtain the image data and/or at least two image objects and an angle between lines formed between each of the objects and a reference point, wherein the image data comprises the at least two image objects and the angle between lines formed between each of the objects and the reference point, and
use the at least two image objects and/or the image data for positioning the first wireless device (331).

11. The wireless device (331, 332) of claim 10, wherein the two image objects are comprised in two different images or different image sets.

12. The wireless device (331, 332) of any of claims 10-11, wherein to use the at least two image objects and/or the image data comprises to process the image data.

13. The wireless device (331, 332) of any of claims 10-12, wherein to use the at least two image objects and/or the image data comprises to obtain a positioning result using the image data or results of processing the image data.

14. The wireless device (331, 332) of any of claims 10-13, further configured to:
obtain the image data comprising the at least two image objects and the angle between lines formed between each of the objects and the reference point,
extract the at least two image objects from the obtained image data, and
determine, from the obtained image data, the angle between the lines formed between each of the objects and the reference point.

15. A positioning node (350) for using image data for positioning a first wireless device (331), the positioning node (350) and the first wireless device (331) configured to operate in a radio communications network (300), the positioning node (350) being configured to:
obtain capability data associated with image-based positioning from one of: a network node (310), the first wireless device (331), a second wireless device (332), a camera device, an image processing node and a server, each configured to operate in the radio communications network (300),
select an image-based positioning method based on the obtained capability data,
obtain the image data and/or at least two image objects and an angle between lines formed between each of the objects and a reference point from the one of: the network node (310), the first wireless device (331), the second wireless device (332), the camera device, the image processing node and the server, wherein the image data comprises at least the two image objects and the angle between lines formed between each of the objects and the reference point, and
use the at least two image objects and/or the image data for positioning the first wireless device (331).

## Patentansprüche

1. Verfahren in einem Funkkommunikationsnetzwerk (300) zur Verwendung von Bilddaten für die Positionierung einer ersten drahtlosen Vorrichtung (331), wobei die erste drahtlose Vorrichtung (331) im Funkkommunikationsnetzwerk (300) arbeitet, das Verfahren umfassend:
*Signalisieren* (401) von Fähigkeitsdaten in Verbindung mit einer bildbasierten Positionierung an einen anderen Knoten (310, 331, 332, 350), der im Funkkommunikationsnetzwerk (300) arbeitet, was Folgendes für einen Positionierungsknoten (350), der im Funkkommunikationsnetzwerk (300) arbeitet, ermöglicht:
Erhalten der Fähigkeitsdaten und
Auswählen eines bildbasierten Positionierungsverfahrens beruhend auf den erhaltenen Fähigkeitsdaten,
*Erhalten* (404) von Bilddaten, die mindestens zwei Bildobjekte und einen Winkel zwischen gebildeten Linien zwischen jedem der Objekte und einem Bezugspunkt umfassen, und
*Verwenden* (407) der mindestens zwei Bildobjekte und/oder der Bilddaten für die Positionierung der ersten drahtlosen Vorrichtung (331) beruhend auf dem Winkel in den erhaltenen Daten,
wobei das Verfahren von mindestens einem von Folgendem ausgeführt wird: einem Netzwerkknoten (310), der ersten drahtlosen Vorrichtung (331), einer Kameravorrichtung, einer zweiten drahtlosen Vorrichtung (332), einem Bildverarbeitungsknoten und einem Server, die alle im Funkkommunikationsnetzwerk (300) arbeiten.

2. Verfahren nach Anspruch 1, wobei die beiden Bildobjekte in zwei unterschiedlichen Bildern oder unterschiedlichen Bildersätzen enthalten sind.

3. Verfahren nach einem der Ansprüche 1 bis 2, wobei das Verwenden (407) der mindestens zwei Bildobjekte und/oder der Bilddaten das *Vorarbeiten* (407a) der Bilddaten umfasst.

4. Verfahren nach einem der Ansprüche 1 bis 3, wobei das Verwenden (407) der mindestens zwei Bildobjekte und/oder der Bilddaten das *Erhalten* (407c) eines Positionierungsergebnisses unter Verwendung der Bilddaten oder der Ergebnisse des Verarbeitens der Bilddaten umfasst.

5. Verfahren nach einem der Ansprüche 1 bis 4, umfassend das *Empfangen* (402) von Hilfsdaten zum Erhalten der Bilddaten von einem Knoten (310, 331, 332, 350), der im Funkkommunikationsnetzwerk (300) arbeitet.

6. Verfahren nach einem der Ansprüche 1 bis 5, wobei das Verwenden (407) der mindestens zwei Bildobjekte und/oder der Bilddaten ferner das *Signalisieren* (407b) der Bilddaten und/oder der mindestens zwei Bildobjekte und des Winkels zwischen gebildeten Linien zwischen jedem der Objekte und einem Bezugspunkt an einen anderen Knoten (310, 331, 332, 350) für eine Positionierung umfasst, wobei der Knoten im Funkkommunikationsnetzwerk (300) arbeitet.

7. Verfahren nach einem der Ansprüche 4 bis 6, wobei das Verwenden (407) der mindestens zwei Bildobjekte und/oder der Bilddaten ferner das *Signalisieren* (407) des Positionierungsergebnisses beruhend auf den mindestens zwei Bildobjekten und/oder den Bilddaten an einen anderen Knoten (310, 331, 332, 350) umfasst, der im Funkkommunikationsnetzwerk (300) arbeitet.

8. Verfahren, ausgeführt von einem Positionierungsknoten (350), des Verwendens von Bilddaten für die Positionierung einer ersten drahtlosen Vorrichtung (331), wobei der Positionierungsknoten (350) und die erste drahtlose Vorrichtung (331) in einem Funkkommunikationsnetzwerk (300) arbeiten, das Verfahren umfassend:
*Erhalten* (501) von Fähigkeitsdaten in Verbindung mit einer bildbasierten Positionierung von einem der Folgenden: einem Netzwerkknoten (310), der ersten drahtlosen Vorrichtung (331), einer zweiten drahtlosen Vorrichtung (332), einer Kameravorrichtung, einem Bildverarbeitungsknoten und einem Server, die alle im Funkkommunikationsnetzwerk (300) arbeiten,
*Auswählen* (503) eines bildbasierten Positionierungsverfahrens beruhend auf den erhaltenen Fähigkeitsdaten,
*Erhalten* (504) der Bilddaten und/oder mindestens zweier Bildobjekte und eines Winkels zwischen gebildeten Linien zwischen jedem der Objekte und einem Bezugspunkt von einem der Folgenden: dem Netzwerkknoten (310), der ersten drahtlosen Vorrichtung (331), der zweiten drahtlosen Vorrichtung (332), der Kameravorrichtung, dem Bildverarbeitungsknoten und dem Server, wobei die Bilddaten die mindestens zwei Bildobjekte und den Winkel zwischen gebildeten Linien zwischen jedem der Objekte und dem Bezugspunkt umfassen, und
*Verwenden* (505) der mindestens zwei Bildobjekte und/oder der Bilddaten für eine Positionierung der ersten drahtlosen Vorrichtung (331).

9. Netzwerkknoten (310) zur Verwendung von Bilddaten für die Positionierung einer ersten drahtlosen Vorrichtung (331), wobei der Netzwerkknoten (310) und die erste drahtlose Vorrichtung (331) konfiguriert sind, im Funkkommunikationsnetzwerk (300) zu arbeiten, wobei der Netzwerkknoten (310) konfiguriert ist zum:
Signalisieren (401) von Fähigkeitsdaten in Verbindung mit einer bildbasierten Positionierung an einen anderen Knoten (331, 332, 350), der konfiguriert ist, im Funkkommunikationsnetzwerk (300) zu arbeiten, was Folgendes für einen Positionierungsknoten (350), der im Funkkommunikationsnetzwerk (300) arbeitet, ermöglicht:
Erhalten der Fähigkeitsdaten,
Auswählen eines bildbasierten Positionierungsverfahrens beruhend auf den erhaltenen Fähigkeitsdaten,
Erhalten der Bilddaten und/oder mindestens zweier Bildobjekte und eines Winkels zwischen gebildeten Linien zwischen jedem der Objekte und einem Bezugspunkt, wobei die Bilddaten die mindestens zwei Bildobjekte und den Winkel zwischen gebildeten Linien zwischen jedem der Objekte und dem Bezugspunkt umfassen, und
Verwenden der mindestens zwei Bildobjekte und/oder der Bilddaten für die Positionierung der ersten drahtlosen Vorrichtung (331).

10. Drahtlose Vorrichtung (331, 332) zur Verwendung von Bilddaten für die Positionierung einer ersten drahtlosen Vorrichtung (331), wobei die drahtlose Vorrichtung (331, 332) und die erste drahtlose Vorrichtung (331) konfiguriert sind, im Funkkommunikationsnetzwerk (300) zu arbeiten, wobei die drahtlose Vorrichtung (331, 332) konfiguriert ist zum:
Signalisieren von Fähigkeitsdaten in Verbindung mit einer bildbasierten Positionierung an einen anderen Knoten (310, 331, 332, 350), der konfiguriert ist, im Funkkommunikationsnetzwerk (300) zu arbeiten, was Folgendes für einen Positionierungsknoten (350), der im Funkkommunikationsnetzwerk (300) arbeitet, ermöglicht:
Erhalten der Fähigkeitsdaten,
Auswählen eines bildbasierten Positionierungsverfahrens beruhend auf den erhaltenen Fähigkeitsdaten,
Erhalten der Bilddaten und/oder der mindestens zwei Bildobjekte und eines Winkels zwischen gebildeten Linien zwischen jedem der Objekte und einem Bezugspunkt, wobei die Bilddaten die mindestens zwei Bildobjekte und den Winkel zwischen gebildeten Linien zwischen jedem der Objekte und dem Bezugspunkt umfassen, und
Verwenden der mindestens zwei Bildobjekte und/oder der Bilddaten für die Positionierung der ersten drahtlosen Vorrichtung (331).

11. Drahtlose Vorrichtung (331, 332) nach Anspruch 10, wobei die beiden Bildobjekte in zwei verschiedenen Bildern oder verschiedenen Bildersätzen enthalten sind.

12. Drahtlose Vorrichtung (331, 332) nach einem der Ansprüche 10 bis 11, wobei die Verwendung der mindestens zwei Bildobjekte und/oder der Bilddaten das Verarbeiten der Bilddaten umfasst.

13. Drahtlose Vorrichtung (331, 332) nach einem der Ansprüche 10 bis 12, wobei die Verwendung der mindestens zwei Bildobjekte und/oder der Bilddaten das Erhalten eines Positionierungsergebnisses unter Verwendung der Bilddaten oder der Ergebnisse des Verarbeitens der Bilddaten umfasst.

14. Drahtlose Vorrichtung (331, 332) nach einem der Ansprüche 10 bis 13, ferner konfiguriert zum:
Erhalten der Bilddaten, umfassend die mindestens zwei Bildobjekte und den Winkel zwischen gebildeten Linien zwischen jedem der Objekte und dem Bezugspunkt,
Entnehmen der mindestens zwei Bildobjekte von den erhaltenen Bilddaten und
Bestimmen des Winkels zwischen den gebildeten Linien zwischen jedem der Objekte und dem Bezugspunkt anhand der erhaltenen Bilddaten.

15. Positionierungsknoten (350) zur Verwendung von Bilddaten für die Positionierung einer ersten drahtlosen Vorrichtung (331), wobei der Positionierungsknoten (350) und die erste drahtlose Vorrichtung (331) konfiguriert sind, in einem Funkkommunikationsnetzwerk (300) zu arbeiten, wobei der Positionierungsknoten (350) konfiguriert ist zum:
Erhalten von Fähigkeitsdaten in Verbindung mit einer bildbasierten Positionierung von einem der Folgenden: einem Netzwerkknoten (310), der ersten drahtlosen Vorrichtung (331), einer zweiten drahtlosen Vorrichtung (332), einer Kameravorrichtung, einem Bildverarbeitungsknoten und einem Server, die alle konfiguriert sind, im Funkkommunikationsnetzwerk (300) zu arbeiten,
Auswählen eines bildbasierten Positionierungsverfahrens beruhend auf den erhaltenen Fähigkeitsdaten,
Erhalten der Bilddaten und/oder mindestens zweier Bildobjekte und eines Winkels zwischen gebildeten Linien zwischen jedem der Objekte und einem Bezugspunkt von einem der Folgenden: dem Netzwerkknoten (310), der ersten drahtlosen Vorrichtung (331), der zweiten drahtlosen Vorrichtung (332), der Kameravorrichtung, dem Bildverarbeitungsknoten und dem Server, wobei die Bilddaten mindestens die zwei Bildobjekte und den Winkel zwischen gebildeten Linien zwischen jedem der Objekte und dem Bezugspunkt umfassen, und
Verwenden der mindestens zwei Bildobjekte und/oder der Bilddaten für die Positionierung der ersten drahtlosen Vorrichtung (331).

## Revendications

1. Procédé, mis en oeuvre dans un réseau de radiocommunication (300), d'utilisation de données d'image en vue de localiser un premier dispositif sans fil (331), le premier dispositif sans fil (331) opérant dans le réseau de radiocommunication (300), le procédé comprenant les étapes ci-dessous consistant à :
*signaler* (401) des données de capacité associées à une localisation à base d'image à un autre noeud (310, 331, 332, 350) opérant dans le réseau de radiocommunication (300), ce qui permet à un noeud de localisation (350) opérant dans le réseau de radiocommunication (300) :
d'obtenir les données de capacité ; et
de sélectionner un procédé de localisation à base d'image sur la base des données de capacité obtenues ;
*obtenir* (404) des données d'image comprenant au moins deux objets d'image et un angle entre des lignes formées entre chacun des objets et un point de référence ; et
*utiliser* (407) lesdits au moins deux objets d'image et/ou les données d'image en vue de localiser le premier dispositif sans fil (331) sur la base de l'angle dans les données obtenues ;
dans lequel le procédé est mis en oeuvre par au moins l'un des éléments parmi : un noeud de réseau (310), le premier dispositif sans fil (331), un dispositif de caméra, un second dispositif sans fil (332), un noeud de traitement d'image et un serveur, opérant chacun dans le réseau de radiocommunication (300).

2. Procédé selon la revendication 1, dans lequel les deux objets d'image sont inclus dans deux images distinctes ou ensembles d'images distincts.

3. Procédé selon l'une quelconque des revendications 1 à 2, dans lequel l'étape d'utilisation (407) desdits au moins deux objets d'image et/ou des données d'image comporte l'étape consistant à *traiter* (407a) les données d'image.

4. Procédé selon l'une quelconque des revendications 1 à 3, dans lequel l'étape d'utilisation (407) desdits au moins deux objets d'image et/ou des données d'image comprend l'étape consistant à *obtenir* (407c) un résultat de localisation en utilisant les données d'image ou des résultats de traitement des données d'image.

5. Procédé selon l'une quelconque des revendications 1 à 4, comprenant en outre l'étape consistant à *recevoir* (402) des données d'assistance en vue d'obtenir les données d'image, à partir d'un noeud (310, 331, 332, 350) opérant dans le réseau de radiocommunication (300).

6. Procédé selon l'une quelconque des revendications 1 à 5, dans lequel l'étape d'utilisation (407) desdits au moins deux objets d'image et/ou des données d'image comprend en outre l'étape consistant à *signaler* (407b) les données d'image et/ou lesdits au moins deux objets d'image, et l'angle entre des lignes formées entre chacun des objets et un point de référence, à un autre noeud (310, 331, 332, 350) opérant dans le réseau de radiocommunication (300), à des fins de localisation.

7. Procédé selon l'une quelconque des revendications 4 à 6, dans lequel l'étape d'utilisation (407) desdits au moins deux objets d'image et/ou des données d'image comprend en outre l'étape consistant à *signaler* (407) le résultat de localisation sur la base desdits au moins deux objets d'image et/ou des données d'image, à un autre noeud (310, 331, 332, 350) opérant dans le réseau de radiocommunication (300).

8. Procédé, mis en oeuvre par un noeud de localisation (350), d'utilisation de données d'image en vue de localiser un premier dispositif sans fil (331), le noeud de localisation (350) et le premier dispositif sans fil (331) opérant dans un réseau de radiocommunication (300), le procédé comprenant :
*obtenir* (501) des données de capacité associées à une localisation à base d'image à partir de l'un parmi : un noeud de réseau (310), le premier dispositif sans fil (331), un second dispositif sans fil (332), un dispositif de caméra, un noeud de traitement d'image et un serveur, opérant chacun dans le réseau de radiocommunication (300) ;
*sélectionner* (503) un procédé de localisation à base d'image sur la base des données de capacité obtenues ;
*obtenir* (504) les données d'image et/ou au moins deux objets d'image, et un angle entre des lignes formées entre chacun des objets et un point de référence, à partir dudit un parmi : le noeud de réseau (310), le premier dispositif sans fil (331), le second dispositif sans fil (332), le dispositif de caméra, le noeud de traitement d'image et le serveur, dans lequel les données d'image comportent lesdits au moins deux objets d'image et l'angle entre des lignes formées entre chacun des objets et le point de référence ; et
*utiliser* (505) lesdits au moins deux objets d'image et/ou les données d'image en vue de localiser le premier dispositif sans fil (331).

9. Noeud de réseau (310) destiné à utiliser des données d'image en vue de localiser un premier dispositif sans fil (331), le noeud de réseau (310) et le premier dispositif sans fil (331) étant configurés de manière à opérer dans le réseau de radiocommunication (300), le noeud de réseau (310) étant configuré de manière à :
signaler (401) des données de capacité associées à une localisation à base d'image à un autre noeud (331, 332, 350) configuré de manière à opérer dans le réseau de radiocommunication (300), ce qui permet à un noeud de localisation (350) opérant dans le réseau de radiocommunication (300) :
d'obtenir les données de capacité ; et
de sélectionner un procédé de localisation à base d'image sur la base des données de capacité obtenues ;
obtenir les données d'image et/ou au moins deux objets d'image, et un angle entre des lignes formées entre chacun des objets et un point de référence, dans lequel les données d'image comportent lesdits au moins deux objets d'image et l'angle entre des lignes formées entre chacun des objets et le point de référence ; et
utiliser lesdits au moins deux objets d'image et/ou les données d'image en vue de localiser le premier dispositif sans fil (331).

10. Dispositif sans fil (331, 332) destiné à utiliser des données d'image en vue de localiser un premier dispositif sans fil (331), le dispositif sans fil (331, 332) et le premier dispositif sans fil (331) étant configurés de manière à opérer dans le réseau de radiocommunication (300), le dispositif sans fil (331, 332) étant configuré de manière à :
signaler des données de capacité associées à une localisation à base d'image à un autre noeud (310, 331, 332, 350) configuré de manière à opérer dans le réseau de radiocommunication (300), ce qui permet à un noeud de localisation (350) opérant dans le réseau de radiocommunication (300) :
d'obtenir les données de capacité ;
de sélectionner un procédé de localisation à base d'image sur la base des données de capacité obtenues ;
obtenir les données d'image et/ou au moins deux objets d'image, et un angle entre des lignes formées entre chacun des objets et un point de référence, dans lequel les données d'image comportent lesdits au moins deux objets d'image et l'angle entre des lignes formées entre chacun des objets et le point de référence ;
utiliser lesdits au moins deux objets d'image et/ou les données d'image en vue de localiser le premier dispositif sans fil (331).

11. Dispositif sans fil (331, 332) selon la revendication 10, dans lequel les deux objets d'image sont inclus dans deux images distinctes ou ensembles d'images distincts.

12. Dispositif sans fil (331, 332) selon l'une quelconque des revendications 10 à 11, dans lequel l'utilisation desdits au moins deux objets d'image et/ou des données d'image comprend le traitement des données d'image.

13. Dispositif sans fil (331, 332) selon l'une quelconque des revendications 10 à 12, dans lequel l'utilisation desdits au moins deux objets d'image et/ou des données d'image comprend l'obtention d'un résultat de localisation en utilisant les données d'image ou des résultats de traitement des données d'image.

14. Dispositif sans fil (331, 332) selon l'une quelconque des revendications 10 à 13, configuré en outre de manière à :
obtenir les données d'image comprenant lesdits au moins deux objets d'image et l'angle entre des lignes formées entre chacun des objets et le point de référence ;
extraire lesdits au moins deux objets d'image des données d'image obtenues ; et
déterminer, à partir des données d'image obtenues, l'angle entre les lignes formées entre chacun des objets et le point de référence.

15. Noeud de localisation (350) destiné à utiliser des données d'image en vue de localiser un premier dispositif sans fil (331), le noeud localisation (350) et le premier dispositif sans fil (331) étant configurés de manière à opérer dans un réseau de radiocommunication (300), le noeud de localisation (350) étant configuré de manière à :
obtenir des données de capacité associées à une localisation à base d'image à partir de l'un parmi : un noeud de réseau (310), le premier dispositif sans fil (331), un second dispositif sans fil (332), un dispositif de caméra, un noeud de traitement d'image et un serveur, configurés chacun de manière à opérer dans le réseau de radiocommunication (300) ;
sélectionner un procédé de localisation à base d'image sur la base des données de capacité obtenues ;
obtenir les données d'image et/ou au moins deux objets d'image, et un angle entre des lignes formées entre chacun des objets et un point de référence, à partir dudit l'un parmi : le noeud de réseau (310), le premier dispositif sans fil (331), le second dispositif sans fil (332), le dispositif de caméra, le noeud de traitement d'image et le serveur, dans lequel les données d'image comportent au moins les deux objets d'image et l'angle entre des lignes formées entre chacun des objets et le point de référence ; et
utiliser lesdits au moins deux objets d'image et/ou les données d'image en vue de localiser le premier dispositif sans fil (331).
